# FASCICULE DE BREVET EUROPEEN

(11) **EP 4 111 018 B1**
(45) Date de publication et mention de la délivrance du brevet: **16.08.2023**
(21) Numéro de dépôt: 21705559.9
(22) Date de dépôt: 19.02.2021
(51) Int. Cl.: E04H 4/10, A63C 19/12, B60J 7/06

(54) **DISPOSITIF DE COUVERTURE D'UNE SURFACE COMPRENANT DES MOYENS DE VERROUILLAGE D'UNE COUVERTURE DANS UNE RAINURE**
VORRICHTUNG ZUM ABDECKEN EINER OBERFLÄCHE MIT MITTELN ZUM VERRIEGELN EINER ABDECKUNG IN EINER NUT
DEVICE FOR COVERING A SURFACE COMPRISING MEANS FOR LOCKING A COVER IN A GROOVE

(30) Priorité: 26.02.2020 BE 202005124
(43) Date de publication de la demande: 04.01.2023
(73) Titulaire: Becoflex, 7110 Strépy-Bracquegnies (BE)
(72) Inventeur: COENRAETS, Benoît, 7110 Strépy-Bracquegnies (BE)
(74) Mandataire: Connor, Marco Tom
(86) Numéro de dépôt international: PCT/EP2021/054152
(87) Numéro de publication internationale: WO 2021/170500

(56) Documents cités:
- WO-A1-2010/010152
- WO-A1-2010/054960
- WO-A1-2014/064138
- WO-A1-2017/162368

## Description

### DOMAINE DE L'INVENTION

L'invention se rapporte à un dispositif de couverture d'une surface, aisé à mettre en oeuvre et répondant au mieux aux exigences de l'application concernée. En particulier, la présente invention concerne un dispositif de couverture dans lequel la couverture comprend des bords longitudinaux munis chacun d'un bourrelet convexe pouvant être ancré de manière réversible à une rainure d'un rail par l'action d'un système d'insertion lors du déploiement de la couverture sur la surface. Une fois inséré dans la rainure, l'élément en saillie est verrouillé de manière autonome sans besoin d'autres éléments extérieurs pour effectuer le verrouillage.

### ARRIÈRE-PLAN TECHNOLOGIQUE

On applique des couvertures sur des surfaces pour des raisons qui dépendent de la nature de ces surfaces. Ainsi, dans le cas d'un bassin tel qu'une piscine la couverture peut éviter la pollution par des feuilles ou des animaux, peut faire économiser de l'énergie, de l'eau et des réactifs et peut ou doit assurer la sécurité des personnes en particulier des enfants. Dans un bassin de dessalement ou d'autres traitements d'un fluide, une couverture permet d'éviter la dilution de liquide due à la pluie ou l'évaporation excessive due à la chaleur.

Lorsqu'il s'agit d'un terrain de sport tel qu'un terrain de tennis externe en terre battue ou gazon, une couverture permet de le protéger contre les intempéries, et en particulier une pluie intermittente. Par ailleurs, une caisse de véhicule est couverte notamment pour assurer la stabilité de la charge à la dépression causée par le déplacement du véhicule et la protéger contre les intempéries. On utilise également des couvertures en tant que stores pour serres, jardins d'hiver ou fenêtres de véhicules afin d'éviter toute surchauffe à l'intérieur, et en tant que protection solaire pour auvents de terrasse.

Dans tous les cas de figure, on recherche généralement un dispositif de couverture économique permettant une mise à couvert et à découvert aisée, sûre, reproductible et rapide, nécessitant un minimum d'intervention humaine et, surtout, ayant une durée de vie aussi longue que possible. De nombreux dispositifs de recouvrement d'une surface ont été développés, allant des modèles basiques aux plus sophistiqués, Par exemple, un premier dispositif tout à fait basique utilisé dans le cas d'une piscine comprend une couverture gonflable ou non que l'on déroule, étend et fixe manuellement sur les bords de la piscine. Ce type de dispositif est illustré par exemple dans les documents US6691334, GB2379163 et FR2652373. Il est clair qu'ici compte tenu de la manutention et du stockage, seules des piscines d'assez petite taille sont concernées.

Beaucoup de dispositifs utilisent un tambour rotatif pour enrouler et stocker la couverture lorsque la surface est découverte. On peut classer les dispositifs de couverture d'une surface utilisant un tambour rotatif en deux catégories.
(a) Dispositifs comprenant un tambour fixé à l'une des extrémités transversales de la surface à protéger. La couverture est déployée par traction, en se déroulant du tambour et est traînée le long de la surface lors de son déploiement et aussi de son retrait. Ceci génère des frictions importantes qui augmentent la force nécessaire aux déploiement et retrait de la couverture, et accélère l'usure de la couverture. Des dispositifs de couverture automatiques sont illustrés notamment dans les documents suivants : US3574979, GB2199741, US2005/0097834, CA2115113, US2001/0023506, US5930848, US400190.
(b) Dispositifs dans lesquels le tambour motorisé est monté sur un mécanisme de translation longitudinale. Celui-ci déplace le tambour au-dessus de la surface à couvrir ce qui permet littéralement de « poser » la couverture sur la surface, lors de son déploiement, en la déroulant simultanément du tambour pendant son déplacement longitudinal, puis de la soulever, lors de son retrait, en l'enroulant simultanément sur le tambour. La couverture ne glisse donc pas sur la surface ni lors de son déploiement ni lors de son retrait. Des exemples de dispositifs automatiques de ce type sont divulgués par exemple dans les documents suivants: WO2005/026473, FR2900951, DE2257231, FR2893651, FR2789425, FR2743502, EP1719858.

La présente invention concerne les dispositifs (b) dans lesquels le tambour motorisé est monté sur un mécanisme de translation longitudinale pour les avantages qu'ils présentent par rapport aux dispositifs (a) comprenant un tambour fixé à une extrémité transversale.

Dans la présente demande, les termes « longitudinal » « transversal » et leurs dérivés se réfèrent respectivement à la direction de déplacement du tambour et à la direction de l'axe de révolution de celui-ci.

Dans beaucoup d'applications, il est avantageux de verrouiller les bords longitudinaux de la couverture au fur et à mesure qu'elle se déploie. Ceci est particulièrement intéressant dans le cas de piscines, car cela permet d'éviter que des personnes s'engageant sur la couverture ne soient précipitées dans l'eau à travers un espace entre le bord longitudinal de la couverture et la margelle de la piscine. En outre, étanchéifier la zone de contact périphérique entre la couverture et les bords longitudinaux de la surface peut éviter l'introduction dans la piscine de saletés, feuilles mortes et brindilles ainsi que de petits animaux tels que des insectes, souris ou des serpents. Cela ouvre aussi la possibilité de pressuriser le volume d'air se trouvant entre la surface de l'eau et la surface inférieure de la couverture, afin de gonfler celle-ci. Des dispositifs plus sophistiques ont été proposés permettant de fixer de manière réversible les bords longitudinaux de la couverture lors de son déploiement, tel que dans le document FR2803769 qui prévoit un système de fixation des bords longitudinaux de la couverture constitué de tronçons de grilles se soulevant puis se rabattant tronçon par tronçon sur lesdits bords longitudinaux de la couverture en maintenant ces bords à l'intérieur d'un caniveau au fur à mesure du déroulement de celle-ci. Dans cette conception, les bords longitudinaux de la couverture sont pincés sans être verrouillés, ce qui procure une moindre sécurité en particulier dans le cas de piscines.

Un système avantageux permettant simultanément de fixer les bords longitudinaux de la couverture lors de son déploiement et d'exercer une force de traction transversale sur celle-ci pour la tendre parfaitement a été décrit dans WO2010/010152, WO2010054960 et dans WO2014064138. Dans ces dispositifs, les bords longitudinaux de la couverture sont munis d'un jonc ou élément en saillie continu qui est introduit dans l'ouverture orientée vers le haut d'un rail en forme de profilé de section en « U », avec une ou deux ailettes refermant partiellement ladite ouverture. L'élément en saillie venant se glisser sous une ailette et retenue dans cette position par des moyens de fixations adéquats, permet de fixer solidement les bords longitudinaux de la couverture.

Les systèmes de verrouillage décrits dans WO2010010152 et WO2010054960 comprennent :
(a) deux rails s'étendent le long des cotés longitudinaux et de part et d'autre de la surface à couvrir. Les rails sont constitués d'un profilé ayant une ouverture vers l'extérieur, (i.e., orientée à l'opposé de la surface à couvrir) sur une de ses faces et comprenant une ou deux ailes fermant partiellement de part et d'autre ladite ouverture (s'il n'y a qu'une aile elle est située du côté adjacent à la surface à couvrir) ;
(b) les bords longitudinaux de la couverture comprennent chacun au moins un élément en saillie continu ayant un profil sensiblement en `T', muni sur tout son long d'une bande fixée à au moins une face de la couverture ;
(c) des moyens d'engagement permettant d'engager ledit élément en saillie continu dans l'ouverture formée par la ou les ailes du rail et de le glisser sous une des ailes ; le profile sensiblement en 'T' de l'élément en saillie décrit dans WO2010010152 est verrouillé dans l'ouverture du rail de manière autonome. Dans le dispositif décrit dans WO2010054960 l'élément en saillie est verrouillé par l'introduction d'une courroie flexible dans l'ouverture du rail sensiblement simultanément avec l'élément en saillie, qui se trouve verrouillé dans le rail par la présence de la courroie flexible, qui est utilisée également pour déplacer le chariot supportant le tambour.

De tels systèmes de verrouillage permettent de glisser l'élément en saillie continu dans l'ouverture du rail et de l'y coincer, soit de manière autonome, soit en y introduisant sensiblement simultanément une courroie flexible, entraînant ainsi la fixation continue dans ledit rail du bord longitudinal correspondant de la couverture et de maintenir par celui-ci la couverture au-dessus de la surface à couvrir même en cas de sollicitations mécaniques très élevées dues par exemple à une différence de pression (i.e., surpression ou dépression) entre les deux surfaces de la couverture, ou au poids de la couverture. Dans le cas des piscines, il confère la sécurité en cas d'accès (autorisé ou non) sur la couverture. La résistance du système de verrouillage peut facilement atteindre une plage de 5 à 10 kN/m (500 à 1000 kg/m) qui est suffisante pour de nombreuses applications. Selon les matériaux utilisés, de plus hautes résistances de verrouillage peuvent être atteintes.

Le profile sensiblement en forme de 'T' doit cependant être fabriqué en un matériau polymère suffisamment flexible pour permettre l'enroulement et déroulement de la couverture autour du tambour, et suffisamment résistant pour résister à la tension appliquée par la couverture déployée. De plus, le couplage d'un tel profile au bord longitudinal correspondant de la couverture reste un défi.

Afin de simplifier la fixation des éléments en saillie aux bords longitudinaux de la couverture, WO2014064138 décrit un élément en saillie en forme d'un bourrelet formé par un cylindre de base ayant une géométrie convexe, de préférence sensiblement circulaire ou elliptique. Un tel bourrelet peut comprendre un coeur plus ou moins rigide selon les applications, enveloppé dans un tissu qui peut être facilement couplé à un bord longitudinal de la couverture par couture, collage, ou soudure. Un bourrelet ayant une base à géométrie convexe est décrit ici comme un « bourrelet convexe » défini comme un bourrelet ayant une base définie en coupe par un périmètre fermé qu'une ligne droite quelconque ne peut traverser plus de deux fois. Un cercle, une ellipse, un triangle, carré, penta-, hexa-, et autres polygones réguliers sont des exemples de géométries convexes. Un profile en 'T' ou en 'H' ne définissent pas une géométrie convexe.

Le verrouillage à l'ouverture d'un rail d'un tel bourrelet convexe décrit dans WO2014064138 nécessite cependant l'introduction sensiblement simultanée dans l'ouverture du rail d'une courroie flexible. Or la synchronisation de l'insertion du bourrelet et d'une courroie flexible dans l'ouverture du rail n'est pas nécessairement aisée et requiert l'utilisation d'un patin d'insertion spécifique.

Il serait intéressant d'avoir une couverture munie de bourrelets convexes, faciles à fixer à la couverture et dont les propriétés mécaniques peuvent être modifiées facilement en fonction du coeur utilisé pour leur confection, et d'un système de verrouillage autonome, permettant de verrouiller à un rail de tels bourrelets sans avoir à introduire simultanément une courroie dans l'ouverture des rails correspondants. La présente invention propose une couverture comprenant le long de ses bords longitudinaux un élément en saillie en forme d'un bourrelet convexe qui se verrouille de manière autonome et réversible dans une rainure munie dans un rail, par l'action d'un système d'insertion. Le dispositif de la présente invention permet le verrouillage ferme et réversible des bords longitudinaux de la couverture dans les rails lors du déploiement de la couverture et de leur déverrouillage lors de son retrait, sans nécessiter l'utilisation de courroies flexibles pour compléter l'opération de verrouillage. Cela permet plus de liberté dans le choix du mécanisme de translation du chariot supportant le tambour. Le document WO 2017/162368 A1 montre un dispositif de couverture selon le préambule de la revendication 1.

### RÉSUMÉ DE L'INVENTION

L'invention est telle que définie dans la revendication principale et des variantes préférées sont définies dans les revendications dépendantes. La présente invention comporte notamment un dispositif de couverture d'une surface comprise dans un rectangle de longueurs s'étendant parallèles à un axe longitudinal (X) et de largeurs s'étendant parallèles à un axe transversal (Y), normal à l'axe longitudinal (X), le dispositif comprenant :
- une couverture sensiblement rectangulaire de dimensions égales à celle du rectangle et ayant deux bords longitudinaux opposés l'un à l'autre et deux bords transversaux opposés l'un à l'autre, chaque bord longitudinal étant muni d'un élément en saillie, s'étendant le long dudit chaque bord longitudinal dans lequel l'élément en saillie de chaque bord longitudinal définit un profile en coupe normale au bord longitudinal correspondant ayant un diamètre minimum (d),
- deux rails placés de part et d'autre de ladite surface parallèles à l'axe longitudinal (X), chaque rail étant constitué d'un profilé ayant une ouverture sur une de ses faces et orientée à l'opposé de la surface à couvrir, l'ouverture donnant accès à un espace dans le rail définissant avec l'ouverture une rainure s'étendant tout le long de chaque rail,
- un tambour de rayon (R) monté à rotation apte à enrouler et dérouler la couverture, ledit tambour étant monté sur un mécanisme de translation longitudinale permettant la translation longitudinale du tambour le long des deux rails, dans un premier sens parallèle à l'axe longitudinal (X) entraînant le déroulement de la couverture et son déploiement au-dessus de la surface à couvrir et dans un second sens parallèle à l'axe longitudinal (X) entraînant l'enroulement de la couverture et son retrait de ladite surface,
- une poulie de renvoi pourvue de chaque côté de la surface à couvrir permettant de guider et positionner ledit élément en saillie de chaque bord longitudinal de la couverture vis-à-vis l'ouverture du rail correspondant lors de la translation dans le premier sens du tambour entraînant le déroulement de la couverture,
- un système d'insertion continu de l'élément en saillie des bords longitudinaux de la couverture à travers l'ouverture et dans l'espace desdits rails,
dans lequel,
- dans une coupe normale à chaque bord longitudinal de la couverture, l'élément en saillie correspondant définit une géométrie convexe, c'est-à-dire une géométrie plane définie par un périmètre fermé qu'une ligne droite quelconque ne peut traverser plus de deux fois,
- dans une coupe transversale, normale à l'axe longitudinal (X), l'ouverture de la rainure a une largeur maximale (Lo), et l'espace a une largeur maximale (Le) supérieure à la largeur maximale (Lo) de l'ouverture (Lo < Le), où les largeurs maximales (Lo, Le) sont mesurées parallèles à l'axe transversal (Y), caractérisé en ce que
- l'élément en saillie de chaque bord longitudinal et la rainure du rail correspondant sont configurés pour qu'une fois inséré dans l'espace par le système d'insertion, l'élément en saillie occupant seul l'espace ne puisse en ressortir par la seule action d'une force (F) appliquée parallèle à l'axe transversal (Y) dans la direction de la surface à couvrir.

Dans une première variante de l'invention,
- le diamètre minimum (d) de l'élément en saillie est inférieur à la largeur maximale (Lo) de l'ouverture (d < Lo), et
- l'élément en saillie a un diamètre maximum (D) supérieur à la largeur maximale (Lo) de l'ouverture (Lo < D).
Le système d'insertion est configuré pour orienter l'élément en saillie à travers l'ouverture du rail correspondant en présentant un diamètre compris entre le diamètre minimum (d) et le diamètre maximum (D) et inférieur à la largeur maximale (L₀) de l'ouverture. L'élément en saillie change d'orientation une fois que l'élément en saillie se trouve dans l'espace.

Dans une autre variante de l'invention, l'élément en saillie de chaque bord longitudinal est compressible tel que,
- dans une configuration de repos, le diamètre minimum (d) est égal à dû qui est compris entre la largeurs maximales (Lo, Le) de l'ouverture et de l'espace du rail correspondant (Lo < dû < Le), et
- dans une configuration comprimée, le diamètre minimum (d) est égal à d1, qui est qui est inférieur ou égal à la largeur maximale (Lo) de l'ouverture du rail correspondant (d1 ≤ Lo),
Le système d'insertion permet de comprimer l'élément en saillie dans sa configuration comprimée lors de son insertion à travers l'ouverture du rail correspondant. L'élément en saillie recouvre sa configuration de repos une fois que l'élément en saillie se trouve dans l'espace.

Dans une autre variante de l'invention, l'élément en saillie de chaque bord longitudinal est un câble en forme de spires consécutives formant un ressort hélicoïdal, dont l'axe est parallèle au bord longitudinal correspondant de la couverture, dans lequel les spires sont définies telles que,
- dans une configuration de repos, le diamètre minimum (d) mesuré parallèle à l'axe transversal (Y) de chaque spire au repos est égal à dû qui est compris entre la largeurs maximales (Lo, Le) de l'ouverture et de l'espace du rail correspondant (Lo < dû < Le), et
- dans une configuration déformée, l'angle formé par des spires déformées avec l'axe longitudinal (X) est modifié de sorte que le diamètre minimum (d1) mesuré dans un plan normal à l'axe longitudinal (X) de chaque spire déformée est inférieur ou égal à la largeur maximale (Lo) de l'ouverture du rail correspondant (d1 ≤ Lo).
Le système d'insertion permet de déformer localement des spires dans leur configuration déformée lors de leur insertion à travers l'ouverture du rail correspondant. Les spires recouvrent leur configuration de repos une fois qu'elles se trouvent dans l'espace.

Dans une série alternative de variantes, la largeur maximale (Lo) de l'ouverture peut varier entre,
- une configuration de repos, dans laquelle la largeur maximale (Lo) de l'ouverture est égale à Lo0, qui est inférieure au diamètre minimum (d) de l'élément en saillie (Lo0 < d), et
- une configuration d'insertion, dans laquelle la largeur maximale (Lo) de l'ouverture est égale à Lo1, qui est supérieure ou égale au diamètre minimum (d) de l'élément en saillie (d ≤ Lo1).
Le système d'insertion est configuré pour appliquer une force permettant d'amener l'ouverture dans sa configuration d'insertion lors de l'insertion de l'élément en saillie à travers l'ouverture du rail correspondant. L'ouverture retournant vers sa configuration de repos une fois que l'élément en saillie se trouve dans l'espace.

Dans une première variante de cette série, l'ouverture comprend une première lèvre opposée à une deuxième lèvre. La première et/ou deuxième lèvre est munie d'une lamelle flexible orientée vers l'autre lèvre opposée. La ou les lamelles définissent au repos l'ouverture de largeur maximale (Lo0) de la configuration de repos et, soumises à une force normale à l'axe longitudinale orientée vers l'espace, fléchissent et définissent ainsi l'ouverture de largeur maximale (Lo1) de la configuration d'insertion.

Dans une autre variante de cette série, l'ouverture comprend une première lèvre opposée à une deuxième lèvre, la première et/ou deuxième lèvre étant munie d'un boudin flexible. Le ou les boudins flexibles définissent au repos l'ouverture de largeur maximale (Lo0) de la configuration de repos et, soumis à une force normale au plan (X, Y), s'écrasent et définissent ainsi l'ouverture de largeur maximale (Lo1) de la configuration d'insertion.

Dans une autre variante de cette série, l'espace contient un boudin flexible. Le boudin flexible au repos obstrue partiellement l'ouverture définissant ainsi la largeur maximale (Lo0) de la configuration de repos et, soumis à une force normale au plan (X, Y), s'écrase et définit ainsi l'ouverture de largeur maximale (Lo1) de la configuration d'insertion.

Dans une dernière variante de cette série, l'ouverture comprend une première lèvre opposée à une deuxième lèvre, la première et/ou deuxième lèvre étant munie d'une brosse comprenant des poils s'étendant vers la lèvre opposée et fermant partiellement ou complètement l'ouverture. Les poils sont suffisamment flexibles pour fléchir et ainsi permettre l'introduction de l'élément en saillie à travers l'ouverture et suffisamment rigide pour retenir l'élément en saillie lorsuqu'il se trouve logé dans l'espace.

Le mécanisme de translation comprend de préférence un chariot monté sur les rails et surplombant transversalement la surface à couvrir et supportant le tambour, comprenant à chacune de ses extrémités :
- une roue d'entraînement dont l'axe de rotation est parallèle à celui dudit tambour ;
- au moins une roulette aval et une roulette amont reposant sur les rails ou sur une surface adjacente aux rails, et permettant la translation longitudinale du chariot, et étant montées la première en aval et la seconde en amont de la roue d'entraînement dans la première direction de déplacement, et constituant avec celle-ci un triangle dont la roue d'entraînement forme un sommet supérieur.

Dans un premier mode de réalisation, la roulette aval et la roulette amont reposent sur le rail correspondant. Le mécanisme de translation comprend deux courroies flexibles fixées uniquement à chacune de leurs extrémités aux quatre coins de la surface à couvrir et s'étendent le long des bords longitudinaux de la surface à couvrir de la manière suivante :
- elles sont disposées dans un canal défini dans les rails, s'étendant séparées et parallèles à la rainure correspondante dans les sections latérales comprises entre un point de fixation et la roulette la plus proche dudit point de fixation,
- elles coiffent sans glissement la roue d'entraînement dans la section centrale comprise entre les deux roulettes.

Dans un second mode de réalisation, le mécanisme de translation comprend :
- deux courroies flexibles fermées formant une boucle et comprenant une face intérieure et une face extérieure séparée de la face intérieure par une épaisseur des courroies, les faces intérieure et extérieure de chaque courroie flexible étant chacune crantée, la surface intérieure de chaque courroie flexible coiffant sans glissement les roulettes amont et aval ainsi que la roue d'entraînement et
- deux crémaillères disposées le long des bords longitudinaux, séparées et parallèles à l'ouverture de chaque rail, la surface extérieure d'une portion de chacune des courroies flexibles comprise entre la roulette aval et la roulette amont correspondantes s'engrenant dans la crémaillère correspondante.

Un dispositif selon la présente invention est particulièrement adapatée pour couvrir une surface sélectionnée parmi :
(a) un bassin rempli ou non d'un liquide tel qu'une piscine, jacuzzi, un bassin de rétention, de traitement ou de désalinisation des eaux ;
(b) un terrain de sports, tel un terrain de tennis ou de cricket ;
(c) une caisse de véhicule,
(d) une surface vitrée telle une serre, un jardin d'hiver ou une fenêtre ou porte,
(e) une ouverture dans un mur, telle une fenêtre ou une porte.

La présente demande concerne également un procédé pour couvrir une surface par une couverture utilisant un dispositif de couverture selon la présente invention, dans lequel :
(a) le tambour se trouve à une extrémité amont de la surface à couvrir, avec un bord transversal de la couverture étant fixé à cette extrémité amont de la surface et le reste de la couverture étant enroulé autour du tambour,
(b) avancer le tambour dans une première direction au-dessus de la surface à couvrir le long des rails et ainsi dérouler du tambour la couverture qui se déploie sur la portion de surface en amont du tambour et, en même temps, guider et maintenir l'élément en saillie de chaque bord longitudinal de la couverture vis-à-vis de l'ouverture du rail correspondant au fur et à mesure que le tambour avance,
(c) introduire l'élément en saillie dans l'espace du rail et verrouiller ainsi l'élément en saillie au rail.

### BRÈVE DESCRIPTION DES FIGURES

Ces aspects ainsi que d'autres aspects de l'invention seront clarifiés dans la description détaillée de modes de réalisation particuliers de l'invention, référence étant faite aux dessins des figures, dans lesquelles :

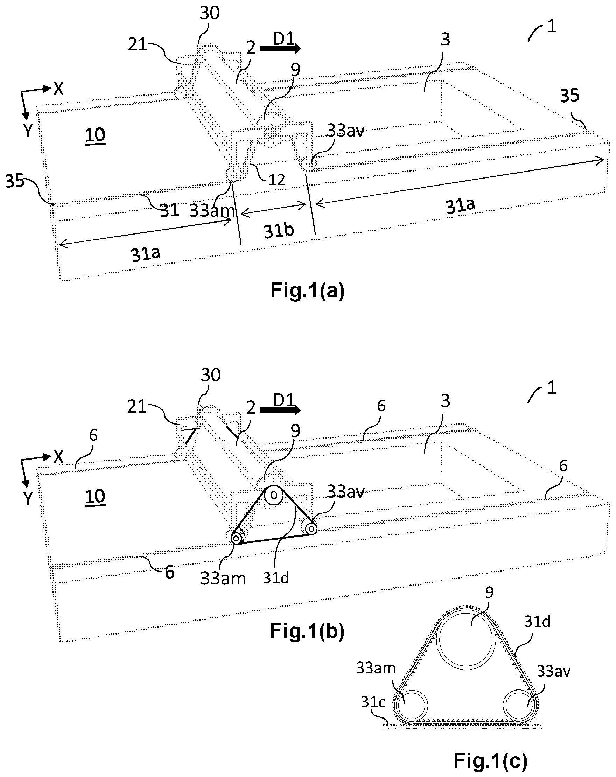

**Fig.1** vue d'ensemble en perspective d'une surface avec un tambour en position telle qu'une partie amont de la surface seulement est recouverte par une couverture, (a) une première variante, (b) une seconde variante et (c) détail des moyens de déplacements de la variante de la Figure 1(b). Les termes « amont » et « aval » sont définis par rapport au premier sens de translation longitudinale du tambour permettant le déploiement de la couverture.

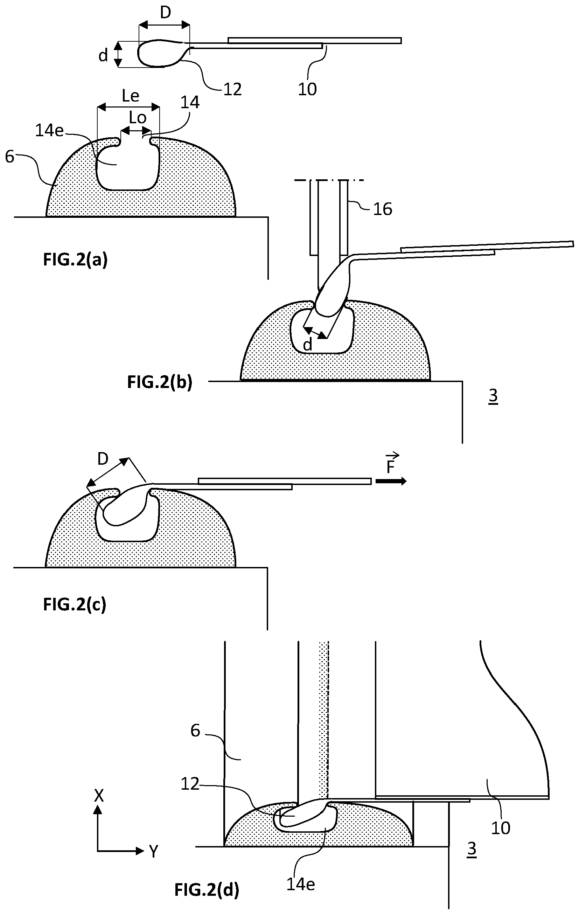

**Fig.2** vues d'un élément en saillie et verrouillage de celui-ci dans la rainure d'un rail (a) avant insertion et verrouillage, (b) pendant l'insertion de l'élément en saillie dans l'ouverture de la rainure, (c) élément en saillie verrouillé dans la rainure du rail, et (d) vue en perspective de l'élément en saillie verrouillé de la Figure 2(c).

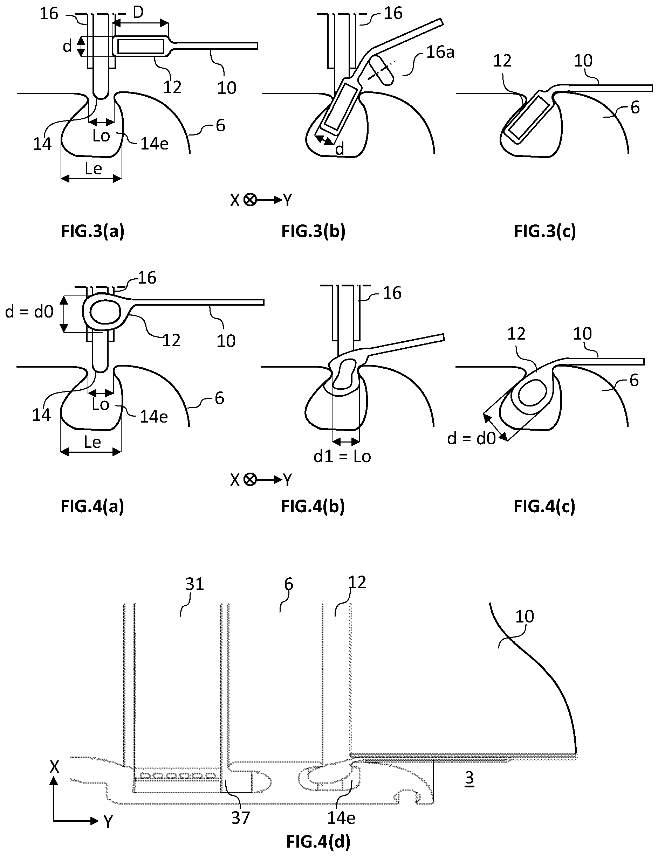

**Fig.3** (a) à (c) vues des étapes d'insertion et verrouillage de l'élément en saillie dans la rainure d'un rail selon une première variante de l'invention.
**Fig.4** (a) à (c) vues des étapes d'insertion et verrouillage de l'élément en saillie dans la rainure d'un rail selon une seconde variante de l'invention et (d) vue en perspective de l'élément en saillie verrouillé dans la rainure du rail avec une courroie d'entraînement logée dans une rainure différente.

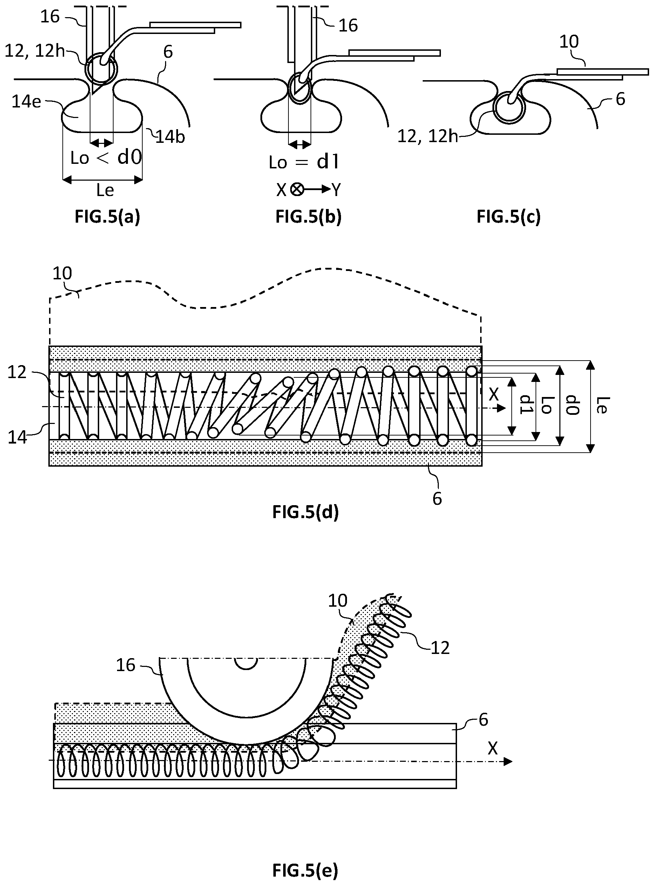

**Fig.5** (a) Vues des étapes d'insertion et verrouillage de l'élément en saillie dans la rainure d'un rail selon une troisième variante de l'invention, (b) vue de haut de la déformation du ressort hélicoïdal, et (c) vue latérale de l'élément en saillie lors de son insertion dans la rainure du rail.

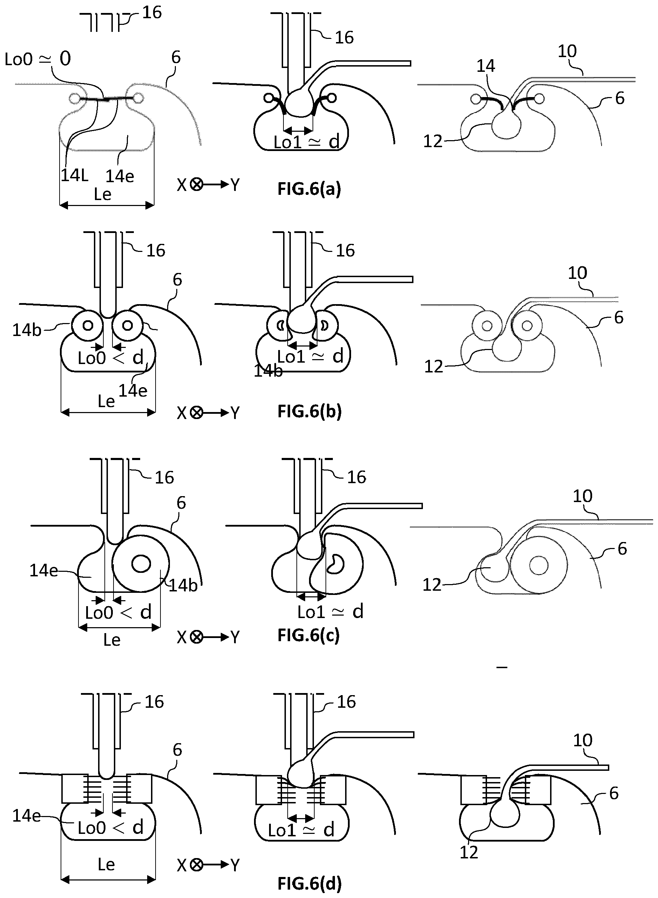

**Fig.6** quatre exemples (a) à (d) de vues des étapes d'insertion et verrouillage de l'élément en saillie dans la rainure d'un rail selon d'autres variantes de l'invention, dans lesquelles la largeur (Lo) de l'ouverture du rail varie lors de l'insertion de l'élément en saillie.

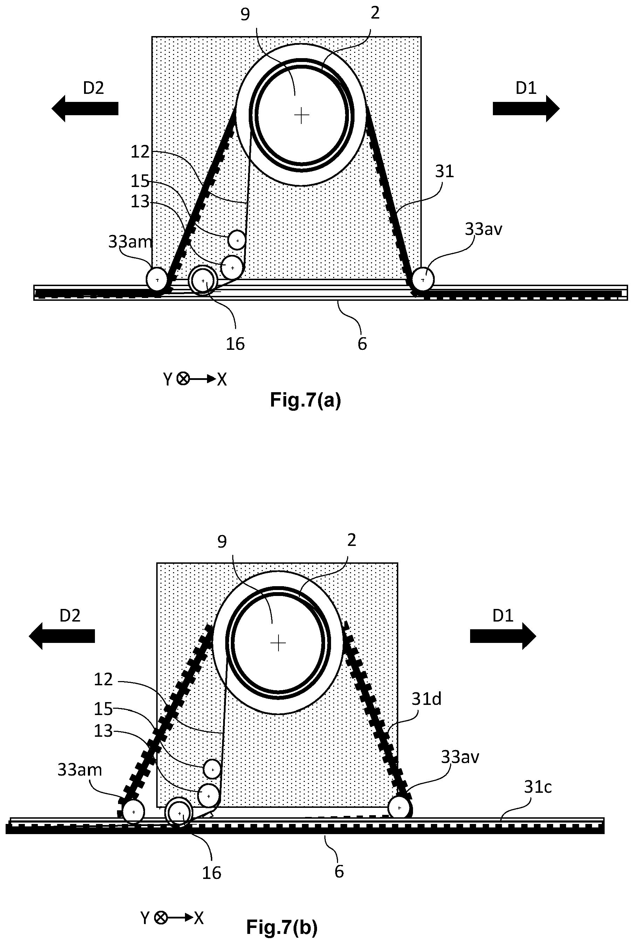

**Fig.7** mécanisme de translation comprenant une courroie selon, d'une part, (a) la variante de la Figure 1(a) et, d'autre part, (b) selon la variante de la Figure 1(b)&(c).

### DESCRIPTION DÉTAILLÉE DE MODES DE RÉALISATION PARTICULIERS

Tel que représenté à la Figure 1, le dispositif automatique de couverture (1) d'une surface (3) selon l'invention comprend une couverture (10) destinée à protéger ladite surface (3) comprise dans un rectangle de longueurs s'étendant parallèles à un axe longitudinal (X) et de largeurs s'étendant parallèles à un axe transversal (Y), normal à l'axe longitudinal (X). Les axes longitudinal (X) et transversal (Y) définissent un plan (X, Y). La couverture (10) comprend une surface extérieure, opposée à la surface à couvrir (3) et une surface intérieure, faisant face à la surface à couvrir. La surface extérieure est séparée de la surface intérieure par une épaisseur de la couverture. Le dispositif (1) permet de couvrir notamment des surfaces définies par le contour d'un bassin d'eau tel qu'une piscine, jacuzzi, bassin de traitement d'eau, station d'épuration d'eaux usées, bassin de rétention, station de désalinisation, jacuzzi, etc. Cependant, l'invention pourra être mise en oeuvre dans tout domaine nécessitant la couverture d'une surface, comme par exemple un terrain de tennis en terre battue ou en gazon, une caisse de véhicule, une surface vitrée de serre, de fenêtre de véhicule tel que train ou bus, ou de jardin d'hiver, etc. D'une manière générale, on entend donc dans la présente demande par « surface » toute zone délimitée par un périmètre.

Le dispositif (1) comprend une couverture sensiblement rectangulaire de dimensions égales à celles du rectangle inscrivant la surface à couvrir, et ayant deux bords longitudinaux opposés l'un à l'autre et deux bords transversaux opposés l'un à l'autre, chaque bord longitudinal étant muni d'un élément (12) en saillie, s'étendant le long dudit chaque bord longitudinal dans lequel l'élément en saillie de chaque bord longitudinal définit un profile en coupe normale au bord longitudinal correspondant ayant un diamètre minimum (d).

Le dispositif comprend deux rails (6) placés de part et d'autre de ladite surface (3) parallèles à l'axe longitudinal (X). Chaque rail est constitué d'un profilé ayant une ouverture (14) sur une de ses faces et orientée à l'opposé de la surface à couvrir. L'ouverture donne accès à un espace (14e) dans le rail définissant avec l'ouverture une rainure s'étendant tout le long de chaque rail.

Un tambour (2) de rayon (R) est monté à rotation apte à enrouler et dérouler la couverture (10) fixée au tambour par son premier bord transversal (amont). Le tambour (2) est monté sur un mécanisme de translation longitudinale permettant la translation longitudinale du tambour le long des deux rails, dans un premier sens parallèle à l'axe longitudinal (X) s'éloignant d'une extrémité amont de la surface et entraînant le déroulement de la couverture et son déploiement au-dessus de la surface à couvrir (3) et dans un second sens parallèle à l'axe longitudinal (X) se rapprochant de l'extrémité amont et entraînant l'enroulement de la couverture et son retrait de ladite surface (3).

Le dispositif (1) comprend un système de fixation situé à l'extrémité transversale amont de la surface à couvrir et permettant de fixer le second bord transversal de la couverture à l'extrémité transversale amont de la surface à couvrir (3). Tout type de système de fixation connu et convenant aux critères de contraintes, de sécurité et, le cas échéant d'étanchéité, selon l'application peut être utilisé à cet effet. Par exemple, le système de fixation peut comprendre une pluralité de sangles solidaires du second bord transversal de la couverture (10), lesdites sangles étant par exemple munies de crochets d'ancrage qui se fixent à l'extrémité transversale amont du contour délimitant la surface à couvrir (3). De manière alternative, on peut munir le second bord transversal de la couverture d'oeillets qui viennent se fixer à l'extrémité transversale amont de la surface par l'intermédiaire d'une série de pitons, de vis, d'un câble ou tout autre moyen. Une autre variante est de coincer le bord transversal de la couverture sous une plaque de longueur correspondant à la largeur de la couverture est fixée à la surface par des vis traversant la couverture. Ces moyens d'ancrage et autres trop nombreux pour être tous mentionnés, maintiennent immobilisée l'extrémité transversale amont de la couverture (10).

Le mécanisme de translation permet la translation longitudinale du tambour (2) dans un premier sens parallèle à l'axe longitudinal (X), entraînant le déroulement de la couverture par rotation dans un premier sens giratoire du tambour autour de son axe et le déploiement de la couverture au-dessus de la surface à couvrir (3) et dans un second sens parallèle à l'axe longitudinal (X), entraînant l'enroulement de la couverture et son retrait de ladite surface (3) par rotation dans un deuxième sens giratoire du tambour.

Le premier sens de translation permet au tambour de s'éloigner de l'extrémité transversale amont de la surface et de dérouler la couverture (10) pour la déployer et couvrir la surface à protéger (3). La rotation dans le premier sens giratoire du tambour est rendue possible par le déplacement du tambour qui exerce une traction sur la couverture dont le premier bord transversal est fixé à l'extrémité transversale amont. Le tambour comprend un moyen résilient tel qu'un ressort spiral qui se tend par la rotation du tambour dans le premier sens de rotation.

Le deuxième sens de translation permet au tambour de se rapprocher de l'extrémité transversale amont de la surface et d'enrouler la couverture (10) pour la retirer et découvrir la surface (3). La rotation dans le deuxième sens du tambour est rendue possible par la détente du moyen résilient tel qu'un ressort spiral qui se détend et entraîne la rotation du tambour dans le deuxième sens de rotation.

Une poulie de renvoi (13) illustrée aux Figures 7(a) et 7(b) pourvue de chaque côté de la surface à couvrir permet de guider et positionner les éléments en saillie (12) des bords longitudinaux de la couverture vis-à-vis l'ouverture (14) du rail (6) correspondant lors de la translation dans la première direction du tambour entraînant le déroulement de la couverture.

La couverture peut être en toute matière convenant à l'application en question : matériaux textiles synthétiques ou naturels, films polymériques, lattes en polymère, en métal ou en bois, etc. Elle peut être transparente, opaque ou translucide et peut former une barrière à des fluides ou au contraire être poreuse, voir même comprendre des mailles telles que dans un filet. Par exemple, pour des applications de piscines ou de bassins de traitement d'eau ou similaire, il est avantageux si la couverture comprend des trous de drainage permettant ainsi à l'eau de pluie de ne pas s'accumuler sur la couverture et évitant ainsi la formation de poches d'eau sur la surface de la couverture.

Le dispositif comprend un système d'insertion (16) continu de l'élément en saillie (12) des bords longitudinaux de la couverture (10) à travers l'ouverture (14) et dans l'espace (14e) desdits rails (6). Le système d'insertion (16) peut être formé par une ou plusieurs roulettes et poulies aptes à tourner autour d'un axe de rotation et pouvant avoir des profiles différents en coupe parallèle à leur axe de rotation. Ce système d'insertion permet d'insérer l'élément en saillie dans la rainure à travers l'ouverture (14) et jusque dans l'espace (14e) et, par la configuration de la rainure et de l'élément en saillie (12), ce dernier demeure verrouillé dans la rainure.au fur et à mesure du déroulement de la couverture (10). Lors de la translation du tambour dans le deuxième sens, l'élément en saillie de la couverture se libère de la rainure, soit simplement par la force de traction appliquée par l'enroulement de la couverture autour du tambour, soit avec la participation du système d'insertion qui permet de désenclencher l'élément en saillie de la couverture hors de la rainure au fur et à mesure de l'enroulement de la couverture autour du tambour.

Comme discuté dans la section Arrière-Plan Technologique, l'élément en saillie (12) définit une géométrie convexe dans une coupe normale à chaque bord longitudinal de la couverture, formant ainsi un bourrelet convexe. Ceci donne une grande liberté dans le choix des propriétés mécaniques, typiquement en flexion et compression, de l'élément en saillie, tout en permettant une fixation simple, robuste et reproductible de l'élément en saillie au bord longitudinal correspondant de la couverture. Pour rappel, un bourrelet convexe est un bourrelet dont la coupe normale au bord longitudinal de la couverture a une géométrie plane définie par un périmètre fermé qu'une ligne droite quelconque ne peut traverser plus de deux fois. Selon sa rigidité en compression, un bourrelet peut être convexe au repos, c'est-à-dire lorsqu'il n'est soumis à aucune contrainte, et peut perdre sa convexité s'il est soumis à des contraintes suffisantes. De tels bourrelets appartiennent à la présente invention puisqu'ils sont convexes au repos.

L'élément en saillie ou bourrelet convexe (12) de chaque bord longitudinal et la rainure du rail correspondant sont configurés pour qu'une fois inséré dans l'espace (14e) par le système d'insertion (16), l'élément en saillie occupant seul l'espace (14e) ne puisse en ressortir par la seule action d'une force (F) appliquée parallèle à l'axe transversal (Y) dans la direction de la surface à couvrir, formant ainsi un verrouillage autonome. Un verrouillage autonome est un verrouillage ne nécessitant pas l'insertion d'un élément autre que l'élément en saillie dans ou à proximité de la rainure, telle que des courroies flexibles décrites dans WO2010054960 et WO2014064138 ou une portion de grillage décrite dans FR2803769. Afin de permettre un tel verrouillage autonome d'un tel bourrelet convexe, l'élément en saillie (bourrelet convexe) (12) et la rainure doivent respecter certains critères.

Tel qu'illustré aux Figures 2(a)-2(d), 3(a)-3(c), 4(a)-4(d), 5(a)-5(c) et 6(a)-6(d), dans une coupe transversale, normale à l'axe longitudinal (X), l'ouverture (14) de la rainure a une largeur maximale (Lo), et l'espace (14e) a une largeur maximale (Le) supérieure à la largeur maximale (Lo) de l'ouverture (14) (Lo < Le), où les largeurs maximales (Lo, Le) sont mesurées parallèles à l'axe transversal (Y). De préférence, l'espace (14e) s'étend au-delà de l'ouverture dans une direction parallèle à l'axe transversal (Y), formant une ailette du côté opposé à la surface (3) à couvrir. De manière alternative ou cumulative, il est également préféré que l'espace (14e) s'étende au-delà de l'ouverture dans une direction parallèle à l'axe transversal (Y), formant une ailette du côté adjacent à la surface (3) à couvrir. Si la rainure ne comprend qu'une seule ailette du côté opposé ou adjacent à la surface à couvrir, la rainure forme un « L » en coupe, d'orientations miroir selon que l'ailette soit du côté opposé ou adjacent à la surface. Si la rainure comprend une ailette de chaque côté de l'ouverture (14), la rainure forme un « T » à l'envers en coupe.

Différentes variantes de réalisation de la présente invention sont présentées dans la suite. Les variantes sont présentées en deux catégories. Dans une première catégorie la largeur maximale (Lo) de l'ouverture (14) demeure constante lors de l'insertion de l'élément en saillie (12). Dans une seconde catégorie, la largeur maximale (Lo) de l'ouverture (14) varie lors de l'insertion de l'élément en saillie (12).

### VARIANTES DANS LESQUELLES Lo = CONSTANTE LORS DE L'INSERTION DE L'ÉLÉMENT EN SAILLIE (12)

### Elément en saillie allongé

Dans une première variante illustrée dans les Figures 2(a) à 2(d) et 3(a) à 3(c), l'élément en saillie a en coupe normale au bord longitudinal de la couverture une géométrie allongée, avec un diamètre minimum (d) inférieur ou égale à la largeur maximale (Lo) de l'ouverture (14) et un diamètre maximum (D) supérieur à la largeur maximale (Lo) de l'ouverture (14) (d < Lo < D). Le système d'insertion (16) est configuré pour orienter l'élément en saillie (12) à travers l'ouverture (14) du rail correspondant en présentant un diamètre compris entre d et D et inférieur ou égale à Lo. Par exemple, comme illustré à la Figure 2(b), le système d'insertion peut comprendre une roulette d'insertion montée à rotation autour d'un axe parallèle à l'axe transversal (Y) sur un chariot (21) supportant le tambour. La roulette d'insertion (16) est positionnée dans l'axe de la rainure, adjacente à, ou même pénétrant partiellement dans l'ouverture (14) de la rainure et se déplace avec le chariot (21). La roulette d'insertion (16) s'appuie sur l'élément en saillie (12) de la couverture et le force à pénétrer dans l'ouverture (14). Par l'action conjuguée de la roulette d'insertion (16) et de la lèvre de l'ouverture (14) adjacente à la surface à couvrir, l'élément en saillie (12) pivote présentant face à l'ouverture une section de diamètre inférieur ou égale à la largeur maximum (Lo) de l'ouverture (14). L'élément en saillie peut donc s'engager dans l'espace (14e) de la rainure et se dégager du contact avec la lèvre adjacente à la surface à couvrir. Une fois que l'élément en saillie se trouve dans l'espace (14e) il peut alors changer d'orientation sous l'action de la tension parallèle à l'axe transversal (Y) appliquée par le poids de et/ou la tension appliquée à la couverture (10). L'élément en saillie, ainsi installé dans l'espace (14e) de la rainure, présente face à l'ouverture une section de diamètre supérieur à la largeur minimum (Lo) de l'ouverture, et ne peut donc sortir de la rainure par la seule action de la force (F) appliquée parallèle à l'axe transversal (Y) dans la direction de la surface à couvrir. Ceci est illustré dans les Figures 2(c) et 2(d).

Dans la variante représentée à la Figure 3, le système d'insertion comprend une roulette d'insertion comme décrite en rapport avec les Figures 2(a) à 2(d), ainsi qu'une poulie d'orientation (16a) illustrée à la Figure 3(b), sur laquelle vient s'appuyer la surface intérieure de la couverture. Les actions conjuguées de la roulette d'insertion (16) et de la poulie d'orientation (16) permettent de donner une orientation désirée précise à l'élément en saillie, sans qu'il ne doive compter sur l'action de la lèvre adjacente à la surface à couvrir de l'ouverture. La poulie d'orientation (16a) est également fixée à rotation au chariot et se déplace avec celui-ci. L'axe de rotation de la poulie (16a) est de préférence normal à l'axe longitudinal (X), afin de permettre à la poulie de « rouler » sur la surface intérieure de la couverture lorsque le chariot se déplace et ainsi limiter l'usure de la couverture par frottements. L'axe de rotation est aussi de préférence transverse à l'axe transversal (Y).

Lors de la translation du chariot dans le premier sens, pour déployer la couverture sur la surface (3), le système d'insertion comprenant la roulette d'insertion (16) et, optionnellement, la poulie d'orientation (16a) permet d'introduire l'élément en saillie dans l'espace de la rainure en orientant adéquatement l'élément en saillie par rapport à l'ouverture (14) et de l'y verrouiller. Lors de la translation du chariot dans le deuxième sens pour recueillir la couverture et la retirer de la surface, le même système d'insertion permet de réorienter l'élément en saillie de sorte à ce qu'il puisse sortir par l'ouverture (14).

Cette variante jouant sur le rapport longueur / largeur (D / d) de l'élément en saillie (12) est simple à mettre en oeuvre et permet de verrouiller de manière réversible et reproductible les bords longitudinaux de la couverture dans la rainure des rails (6) correspondants. L'absence de d'éléments mobiles (à part les poulies rotatives), augmente la durabilité du système de verrouillage.

### Elément en saillie compressible

Dans une seconde variante illustrée dans la Figure 4, l'élément en saillie de chaque bord longitudinal est compressible tel qu'il peut passer d'une configuration de repos à une configuration comprimée. Comme illustré dans la Figure 4(a), dans la configuration de repos, le diamètre minimum (d) de l'élément en saillie est égal à dû qui est compris entre la largeurs maximales (Lo, Le) de l'ouverture (14) et de l'espace (14e) du rail correspondant (Lo < d0 < Le). Comme illustré à la Figure 4(b), dans sa configuration de repos, l'élément en saillie (12) ne peut donc pas passer à travers l'ouverture (14). Dans la configuration comprimée, le diamètre minimum (d) de l'élément en saillie est égal à d1, qui est qui est inférieur ou égale à la largeur maximale (Lo) de l'ouverture (14) du rail correspondant (d1 ≤ Lo), L'élément en saillie peut donc passer à travers l'ouverture dans sa configuration comprimée.

Le système d'insertion permet de comprimer l'élément en saillie (12) dans sa configuration comprimée lors de son insertion à travers l'ouverture (14) du rail (6) correspondant. Comme illustré dans les Figures 4(a) et 4(b), et comme discuté en relation avec la variante illustrée à la Figure 2, le système d'insertion peut comprendre une roulette d'insertion montée à rotation autour d'un axe parallèle à l'axe transversal (Y) sur le chariot (21) supportant le tambour. La roulette d'insertion (16) est positionnée dans l'axe de la rainure, adjacente à, ou même pénétrant partiellement dans l'ouverture (14) de la rainure et se déplace avec le chariot (21). La roulette d'insertion (16) s'appuie sur l'élément en saillie (12) de la couverture et le force à pénétrer dans l'ouverture (14). Par l'action conjuguée de la roulette d'insertion qui appuie l'élément en saillie contre l'ouverture du rail, et de la larguer (Lo) de l'ouverture du rail qui est insuffisante pour laisser passer un élément en saillie de diamètre (d0 > Lo), l'élément en saillie est comprimé. Son diamètre diminue jusqu'à devenir suffisamment petit pour passer dans l'ouverture (14) lorsque d1 = Lo, tel qu'illustré à la Figure 4(b). Une fois que l'élément en saillie se trouve dans l'espace (14e), il recouvre sa configuration de repos par résilience. Le bord longitudinal de la couverture est ainsi verrouillé dans la rainure du rail comme illustré dans les Figures 4(c) et 4(d). A la Figure 4(d), une courroie flexible (31) utilisé pour la translation du chariot est également illustrée et est discutée par la suite.

L'élément en saillie (12) peut être retiré de l'espace de la rainure à travers l'ouverture (14) en le déformant par traction appliquée sur la couverture pour le sortir de la rainure. En rencontrant la résistance offerte par l'ouverture 'de largeur maximale (Lo) au passage de sections de l'élément en saillie ayant un diamètre supérieur à Lo, l'élément en saillie est comprimé jusqu'à ce que le diamètre (d1) de ladite section soit au plus égal à Lo et puisse ainsi passer à travers l'ouverture (14). La sortie de l'élément en saillie de la rainure par compression peut être facilitée en donnant à l'élément en saillie une géométrie évasée à son point d'attache à la couverture, comme illustrée à la Figure 4.

L'élément en saillie (12) compressible forme un bourrelet convexe qui peut être monolithique et plein ou, comme représenté à la Figure 4, peut avoir un coeur entouré par une enveloppe. Le coeur peut être vide ou rempli d'un matériau différent de celui de l'enveloppe. L'enveloppe peut être formée d'un polymère extrudé, de préférence un élastomère. Alternativement, l'enveloppe peut être sous forme d'un tissu. Dans ce cas, le coeur n'est de préférence pas vide, mais comprend un élastomère ou une mousse compressible.

Comme la variante illustrée aux Figures 2 et 3, la présente variante ne comprend pas de pièces mobiles et est simple à réaliser. Elle permet de verrouiller de manière réversible et reproductible les bords longitudinaux de la couverture dans la rainure des rails (6) correspondants. Il faut rester attentif à l'évolution de l'usure de l'élément en saillie compressible lors de nombreuses utilisations répétées.

### Ressort hélicoïdal

Dans une troisième variante illustrée dans la Figure 5, l'élément en saillie de chaque bord longitudinal est un câble en forme de spires consécutives formant un ressort hélicoïdal, dont l'axe est parallèle au bord longitudinal correspondant de la couverture (10). Les spires peuvent passer d'une configuration de repos à une configuration déformée. Comme illustré aux Figures 5(a), 5(c) et 5(d), dans la configuration de repos, le diamètre minimum (d) mesuré parallèle à l'axe transversal (Y) de chaque spire au repos est égal à d0 qui est compris entre les largeurs maximales (Lo, Le) de l'ouverture (14) et de l'espace (14e) du rail correspondant (Lo < dû < Le). Dans sa configuration de repos, une spire de l'élément en saillie ne peut passer à travers l'ouverture de la rainure.

Comme illustré aux Figures 5(b) et 5(d), dans la configuration déformée, l'angle formé par des spires déformées avec l'axe longitudinal (X) est modifié de sorte que le diamètre minimum (d1) mesuré dans un plan normal à l'axe longitudinal (X) de chaque spire déformée est inférieur ou égal à la largeur maximale (Lo) de l'ouverture (14) du rail correspondant (d1 ≤ Lo), Ceci est illustré par la vue du dessus de la Figure 5(d) montrant les spires du milieu qui sont déformées en changeant leur orientation, de sorte que la projection des spires ainsi déformées sur un plan normal à l'axe longitudinal (X) a un diamètre minimum (d1) inférieur ou égal à la largeur (Lo) de l'ouverture du rail. Les spires dans leur configuration déformées peuvent donc pénétrer à travers l'ouverture (14) de la rainure.

Le système d'insertion permet de déformer localement des spires dans leur configuration déformée lors de leur insertion à travers l'ouverture (14) du rail (6) correspondant. Le système d'insertion peut comprendre une roulette d'insertion (16) qui, comme dans les variantes illustrées aux Figures 2 à 4, peut être montée à rotation autour d'un axe parallèle à l'axe transversal (Y) sur le chariot (21) supportant le tambour. La roulette d'insertion (16) est positionnée dans l'axe de la rainure, adjacente à, ou même pénétrant partiellement dans l'ouverture (14) de la rainure et se déplace avec le chariot (21). La roulette d'insertion (16) s'appuie sur des spires de l'élément en saillie (12) de la couverture en les déformant dans leur configuration déformée et les force à pénétrer dans l'ouverture (14). Alors que les roulettes d'insertion discutées en rapport avec les variantes illustrées dans les Figures 2 à 4 forment de préférence une jante arrondie convexe afin de limiter l'usure de l'élément en saillie de la couverture sur lequel elle appuie, la roulette d'insertion (16) pour changer l'orientation des spires jusqu'à atteindre la configuration déformée de la présente variante, a de préférence une jante biseautée telle qu'illustrée dans les Figures 5(a) et 5(b). La tranche aigüe formée par la jante biseautée de la roulette d'insertion pénètre entre les spires et les déforme en les tournant sur un axe normal au plan (X, Y). Comme illustré à la Figure 5(d) les spires ainsi déformées peuvent entrer dans l'espace (14e) de la rainure par l'ouverture (14). La Figure 5(e) montre une vue latérale de l'introduction spire par spire du ressort hélicoïdal dans la rainure d'un rail (6).

Une fois qu'elles se trouvent dans l'espace (14e) les spires recouvrent leur configuration de repos et le diamètre minimum (d0) correspondant, qui ne permet pas le passage des spires à travers l'ouverture (14). Les bords longitudinaux de la couverture sont ainsi verrouillés dans les rails correspondants.

Le déverrouillage se fait de la même façon. Lors de sa translation dans le deuxième sens pour récupérer la couverture sur le tambour, la roulette d'insertion (16) pénètre entre les spires logées dans l'espace (14e) et les fait pivoter dans la configuration déformée. La traction appliquée sur la couverture par le tambour en rotation suffit pour sortir les spires déformées de la rainure et ainsi libérer progressivement les bords longitudinaux de la couverture des rails correspondants.

Le câble en forme de spires consécutives formant un ressort hélicoïdal peut être fait de différents matériaux. Par exemple, le câble peut être fait de métal, tel que de l'acier inoxydable, ou un alliage d'aluminium. Le métal et, en particulier, l'acier est de préférence trempé ou en tout cas suffisamment rigide pour ne pas être déformé plastiquement à la moindre contrainte, en marchant dessus ou similaire. Une fois déformées plastiquement, les spires ne peuvent plus servir à verrouiller convenablement les bords longitudinaux de la couverture. Le câble peut être fait en polymère ou en polymère renforcé de fibres de renfort, telles que des fibres de verre, de carbone, de fibres naturelles ou de fibres aramides (e.g., Kevlar^{®}, Twaron^{®}).

Les variantes précédentes ont en commun que la largeur maximale (Lo) de l'ouverture (14) ne varie pas lors du verrouillage et déverrouillage des éléments en saillie (12). La présente invention peut également être mise en oeuvre en permettant à la largeur Lo de l'ouverture (14) de varier lors de l'insertion et retrait de l'élément en saillie (12).

### VARIANTES DANS LESQUELLES Lo VARIE LORS DE L'INSERTION DE L'ÉLÉMENT EN SAILLIE (12)

Les Figures 6(a) à 6(d) illustrent différentes variantes ayant en commun que la largeur maximale (Lo) de l'ouverture (14) peut varier entre,
- une configuration de repos, dans laquelle la largeur maximale (Lo) de l'ouverture est égale à Lo0, qui est inférieure au diamètre minimum (d) de l'élément en saillie (12) (Lo0 < d), et
- une configuration d'insertion, dans laquelle la largeur maximale (Lo) de l'ouverture est égale à Lo1, qui est supérieure ou égale au diamètre minimum (d) de l'élément en saillie (12) (d ≤ Lo1).

Le système d'insertion (16) de ces variantes est configuré pour appliquer une force permettant d'amener l'ouverture (14) dans sa configuration d'insertion lorsque l'élément en saillie se trouve dans l'ouverture (14) lors de l'insertion et le retrait de l'élément en saillie (12) à travers l'ouverture (14) du rail (6) correspondant, L'ouverture (14) retourne vers sa configuration de repos une fois que l'élément en saillie se trouve hors de l'ouverture, soit dans l'espace (14e) lors de son insertion dans la rainure, soit hors du rail, lors de son retrait de la rainure.

### Lamelles flexibles

Dans une première variante illustrée à la Figure 6(a), l'ouverture (14) comprend une première lèvre opposée à une deuxième lèvre. La première et/ou deuxième lèvre(s) est/sont munie(s) d'une lamelle flexible (14L) orientée vers l'autre lèvre opposée. La ou les lamelles au repos ferment au moins partiellement l'ouverture, définissent l'ouverture de largeur maximale (Lo0) de la configuration de repos. Lorsque la/les lamelle(s) est/sont soumise(s) à une force transverse, de préférence normale au plan (X, Y) orientée vers ou hors de l'espace (14e), la/les lamelle(s) fléchit/ssent et définit/ssent ainsi l'ouverture de largeur maximale (Lo1) de la configuration d'insertion.

Les lamelles sont de préférence faites d'un élastomère ayant la rigidité suffisante pour maintenir la configuration de repos lors d'application de contraintes inférieures à une limite prédéfinie, et suffisamment flexibles pour fléchir lorsque la contrainte appliquée est supérieure à cette limite prédéfinie. Elles doivent être résilientes ou élastiques afin de retrouver leur configuration de repos lorsque la contrainte passe à nouveau sous la limite prédéfinie. L'illustration de gauche de la Figure 6(a) montre un rail en coupe normale à l'axe longitudinal (X) comprenant une rainure. On voit une roulette d'insertion (16) à l'arrière-plan. Chaque lèvre définissant l'ouverture (14) est munie d'une lamelle s'étendant vers la lèvre opposée. Les bords libres des deux lamelles se touchent définissant une largeur d'ouverture (Lo0) au repos de 0. Il est clair que les lames ne doivent pas nécessairement se toucher et la largeur d'ouverture au repos (Lo0) peut être supérieure à zéro mais inférieure au diamètre minimum (d) de l'élément en saillie (12). Les lamelles peuvent également se superposer partiellement en s'étendant chacune plus loin que la moitié de la distance séparant les deux lèvres (0 < Lo0 < d). Ici de nouveau une largeur Lo0 = 0 serait obtenue. Une distance Lo0 = 0 a l'avantage de fermer la rainure lorsque l'espace (14e), réduisant ainsi considérablement l'accumulation de poussières et saletés dans le fond de la rainure.

Comme dans les variantes précédentes illustrées aux Figures 2 à 5, le système d'insertion peut comprendre une roulette d'insertion montée à rotation autour d'un axe parallèle à l'axe transversal (Y) sur le chariot (21) supportant le tambour. La roulette d'insertion (16) est positionnée dans l'axe de la rainure, adjacente à, ou même pénétrant partiellement dans l'ouverture (14) de la rainure et se déplace avec le chariot (21). La roulette d'insertion (16) s'appuie sur l'élément en saillie (12) de la couverture et le force à pénétrer dans l'ouverture (14). Alors que le chariot avance dans le premier sens de déploiement de la couverture sur la surface, la roulette d'insertion applique une force normale au plan (X, Y) sur l'élément en saillie (12) qui force la déformation des lamelles qui passent de leur configuration de repos à la configuration d'insertion en fléchissant et augmentant la largeur maximale de l'ouverture à Lo1 = d. L'élément en saillie peut alors pénétrer à travers l'ouverture et se loger dans l'espace (14e) (cf. illustrations du milieu et de droite de la Figure 6(a)).

Le retrait de l'élément en saillie de la rainure du rail se fait par la traction de la couverture causée par l'enroulement de celle-ci autour du tambour, qui force la déformation des lamelles jusqu'à leur configuration d'insertion, permettant le passage de l'élément en saillie à travers l'ouverture (14).

### Boudins flexibles 1

La Figure 6(b) illustre une seconde variante dans laquelle l'ouverture (14) comprend une première lèvre opposée à une deuxième lèvre, la première et/ou deuxième lèvre étant munie d'un boudin flexible (14b). Le ou les boudins flexibles (14b) définissent au repos l'ouverture de largeur maximale (Lo0) de la configuration de repos. Le ou les boudins flexible (14b) se déforment et s'écrasent lorsqu'ils sont soumis à une force normale au plan (X, Y) et définissent ainsi l'ouverture de largeur maximale (Lo1) de la configuration d'insertion.

Comme dans la variante de la Figure 6(a) discutée supra, le système d'insertion peut comprendre une roulette d'insertion montée à rotation autour d'un axe parallèle à l'axe transversal (Y) sur le chariot (21) supportant le tambour. La roulette d'insertion (16) est positionnée dans l'axe de la rainure, adjacente à, ou même pénétrant partiellement dans l'ouverture (14) de la rainure et se déplace avec le chariot (21). La roulette d'insertion (16) s'appuie sur l'élément en saillie (12) de la couverture et le force à pénétrer dans l'ouverture (14). Alors que le chariot avance dans le premier sens de déploiement de la couverture sur la surface, la roulette d'insertion applique une force normale au plan (X, Y) sur l'élément en saillie (12) qui force la déformation du ou des boudins flexibles (14b) qui passent de la configuration de repos à la configuration d'insertion en s'écrasant et augmentant ainsi la largeur maximale de l'ouverture à Lo1 = d. L'élément en saillie peut alors pénétrer à travers l'ouverture et se loger dans l'espace (14e) (cf. illustrations du milieu et de droite de la Figure 6(b)).

Le retrait de l'élément en saillie de la rainure du rail se fait par la traction de la couverture causée par l'enroulement de celle-ci autour du tambour, qui force la déformation du ou des boudins flexibles (14b) jusqu'à leur configuration d'insertion, permettant le passage de l'élément en saillie à travers l'ouverture (14).

### Boudins flexibles 2

La Figure 6(c) illustre une troisième variante dans laquelle l'espace (14e) contient un boudin flexible (14b), le boudin flexible (14b) au repos obstruant partiellement l'ouverture définissant ainsi la largeur maximale (Lo0) de la configuration de repos. Le boudin flexible (14b) se déforme et s'écrase lorsqu'il est soumis à une force normale au plan (X, Y) et définit ainsi l'ouverture de largeur maximale (Lo1) de la configuration d'insertion.

Comme dans la variante de la Figure 6(b) discutée supra, le système d'insertion peut comprendre une roulette d'insertion montée à rotation autour d'un axe parallèle à l'axe transversal (Y) sur le chariot (21) supportant le tambour. La roulette d'insertion (16) est positionnée dans l'axe de la rainure, adjacente à, ou même pénétrant partiellement dans l'ouverture (14) de la rainure et se déplace avec le chariot (21). La roulette d'insertion (16) s'appuie sur l'élément en saillie (12) de la couverture et le force à pénétrer dans l'ouverture (14). Alors que le chariot avance dans le premier sens de déploiement de la couverture sur la surface, la roulette d'insertion applique une force normale au plan (X, Y) sur l'élément en saillie (12) qui force la déformation du boudin flexibles (14b) qui passe de la configuration de repos à la configuration d'insertion en s'écrasant et augmentant ainsi la largeur maximale de l'ouverture à Lo1 = d. L'élément en saillie peut alors pénétrer à travers l'ouverture et se loger dans l'espace (14e) (cf. illustrations du milieu et de droite de la Figure 6(c)).

Le retrait de l'élément en saillie de la rainure du rail se fait par la traction de la couverture causée par l'enroulement de celle-ci autour du tambour, qui force la déformation du boudin flexible (14b) jusqu'à la configuration d'insertion, permettant le passage de l'élément en saillie à travers l'ouverture (14).

Les boudins flexibles (14b) des variantes illustrées aux Figures 6(b) et 6(c) se présentent de préférence sous forme de tubes creux ou comprenant un coeur en un matériau compressible, telle qu'une mousse synthétique. Les boudins flexibles sont de préférence extrudés en un matériau élastomère.

### Brosses à poils flexibles

La Figure 6(d) illustre une quatrième variante dans laquelle lequel l'ouverture (14) comprend une première lèvre opposée à une deuxième lèvre. La première et/ou deuxième lèvre sont munies d'une brosse comprenant des poils s'étendant vers la lèvre opposée et fermant partiellement ou complètement l'ouverture (14), lesdits poils étant suffisamment flexibles pour fléchir et ainsi permettre l'introduction de l'élément en saillie (12) à travers l'ouverture (14)

Les brosses sont de préférence faites en polymère, les poils ayant la rigidité suffisante pour maintenir la configuration de repos lors d'application de contraintes inférieures à une limite prédéfinie, et suffisamment flexibles pour fléchir lorsque la contrainte appliquée est supérieure à cette limite prédéfinie. Ils doivent être résilients ou élastiques afin de retrouver leur configuration de repos lorsque la contrainte passe à nouveau sous la limite prédéfinie.

Comme dans les variantes précédentes illustrées aux Figures 6(a) à 6(c), le système d'insertion peut comprendre une roulette d'insertion montée à rotation autour d'un axe parallèle à l'axe transversal (Y) sur le chariot (21) supportant le tambour. La roulette d'insertion (16) est positionnée dans l'axe de la rainure, adjacente à, ou même pénétrant partiellement dans l'ouverture (14) de la rainure et se déplace avec le chariot (21). La roulette d'insertion (16) s'appuie sur l'élément en saillie (12) de la couverture et le force à pénétrer dans l'ouverture (14). Alors que le chariot avance dans le premier sens de déploiement de la couverture sur la surface, la roulette d'insertion applique une force normale au plan (X, Y) sur l'élément en saillie (12) qui force la déformation des poils des brosses qui passent de leur configuration de repos à la configuration d'insertion en fléchissant et augmentant la largeur maximale de l'ouverture à Lo1 = d. L'élément en saillie peut alors pénétrer à travers l'ouverture et se loger dans l'espace (14e) (cf. illustrations du milieu et de droite de la Figure 6(a)).

Le retrait de l'élément en saillie de la rainure du rail se fait par la traction de la couverture causée par l'enroulement de celle-ci autour du tambour, qui force la déformation des poils des brosses jusqu'à leur configuration d'insertion, permettant le passage de l'élément en saillie à travers l'ouverture (14).

### GUIDAGE DES ÉLÉMENTS EN SAILLIE VERS L'OUVERTURE

Le guidage des éléments en saillie dans l'ouverture est rendu possible par la poulie de renvoi (13) sensiblement cylindrique montée à rotation selon un axe parallèle à la direction transverse de la couverture de chaque côté du tambour. Les Figures 7(a) et 7(b) montrent un exemple de poulie de renvoi (13) formée par une poulie montée sur un axe parallèle à l'axe du tambour et à l'axe transversal (Y). La couverture (10) enveloppe partiellement la poulie de renvoi qui pousse l'élément en saillie en l'éloignant de la surface à couvrir, afin de la maintenir en aplomb de l'ouverture (14) des rails correspondants, en alignement avec le système d'insertion (16). Comme le diamètre du tambour varie lors de ses translations selon la quantité de couverture qu'il supporte, le dispositif peut comprendre une poulie d'alignement (15) qui assure que le bord longitudinal de la couverture et son élément en saillie (12) atteigne la poulie de renvoi (13) toujours avec le même angle, quelque soit la position du chariot par rapport à l'axe longitudinal (X).

### MÉCANISME DE DÉPLACEMENT

Comme illustré aux Figures 1(a) et 1(b) et 7(a) et 7(b), le mécanisme de déplacement comprend de préférence un chariot (21) monté sur les rails (6) et surplombant transversalement la surface (3) à couvrir et supportant le tambour (2) comprenant à chacune de ses extrémités :
- une roue d'entraînement (9) dont l'axe de rotation est parallèle à celui du tambour (2);
- au moins une roulette aval (33av) et une roulette amont (33am) reposant sur les rails (6) ou sur une surface adjacente aux rails, et permettant la translation longitudinale du chariot (21). La roulette aval (33av) est montées en aval de la roue d'entraînement et la roulette amont (33am) en amont de la roue d'entraînement (9) dans la première direction de déplacement, et constituant avec celle-ci un triangle de préférence sensiblement isocèle dont la roue d'entraînement (9) forme un sommet supérieur.

Les termes « amont » et « aval » sont utilisés par rapport au déplacement du tambour dans la première direction permettant le déploiement de la couverture sur la surface. La portion de surface située en amont du tambour est déjà recouverte par la couverture, alors que la portion de surface située en aval du tambour ne l'est pas encore. Les roulettes amont et aval (33am, 33av) reposent sur les rails (6), mais sont de préférence séparées de et ne roulent pas sur l'ouverture (14) des rainures. De préférence, les roulettes amont et aval (33am, 33av) reposent adjacent à l'ouverture (14) des rainures, celles-ci séparant les roulettes amont et aval de la surface à couvrir (3).

Le déplacement du tambour le long d'une surface à couvrir ou découvrir se produit généralement à une vitesse constante. Les roues d'entraînement (9) doivent donc tourner à une vitesse de rotation sensiblement constante. Cependant, surtout pour des surfaces de dimensions longitudinales importantes, les diamètres extérieurs du tambour lorsque la couverture est déployée ou retirée peuvent varier considérablement. Comme la vitesse de déploiement/retrait de la couverture dépend de la vitesse de rotation des roues d'entraînement (qui demeure généralement constante) et comme le diamètre extérieur du tambour varie avec la portion de couverture qui y est enroulée, il s'ensuit que le tambour et les roues d'entraînement (9) ne peuvent tourner à la même vitesse. Pour des couvertures de petites dimensions, il est possible de compenser les différences de vitesse par une traction sur la couverture. Pour des couvertures de dimensions longitudinales plus importantes, comme pour une piscine ou une remorque d'un semi-remorque, il est nécessaire de prévoir des moyens de modification de la vitesse relative de rotation entre le tambour d'enroulement/déroulement de la couverture et l'axe de rotation des roues d'entraînement (9). Ces moyens peuvent inclure un ressort spiralé placé à l'intérieur du tambour (2) permettant de compenser la différence entre la vitesse de rotation des roues d'entraînement, qui doit rester sensiblement constante, et la vitesse de rotation du tambour, qui varie avec le diamètre extérieur du tambour au fur et à mesure que la couverture est enroulée/déroulée. Comme décrit plus haut, lors du déploiement de la couverture, le tambour tourne spontanément dû à la tension créée par la couverture qui est fixée à l'extrémité transversale amont de la surface à couvrir. Si le ressort spiralé se tend pendant le déploiement de la couverture (10) sur la surface, il n'est pas nécessaire de motoriser la rotation du tambour non plus lors du ramassage et ré-enroulement de la couverture autour du tambour, dont la rotation est conduite par la détente du ressort spiralé. Ce système est très avantageux car il ne nécessite pas de deuxième moteur ou d'un système d'engrenages ou de contrôle électronique pour tourner le tambour à la vitesse adéquate.

Dans une variante préférée de mécanisme de translation illustrée aux Figures 1(a) et 7(a), le mécanisme de translation comprend deux courroies flexibles (31) fixées uniquement à chacune de leurs extrémités (35) aux quatre coins de la surface à couvrir, chacune des deux courroies (31):
- elles sont disposées dans un canal (37) défini de préférence dans les rails (6), s'étendant séparées et parallèles à la rainure correspondante dans les sections latérales (31a) comprises entre un point de fixation (35) et la roulette (33av, 33am) la plus proche dudit point de fixation (cf. Figure 4(d)),
- elles coiffent sans glissement la roue d'entraînement (9) dans la section centrale (31b) comprise entre les deux roulettes (33av, 33am).

Les portions de courroies introduites dans la section latérale (31a) située en amont de la roulette amont (33am), i.e., entre la roulette amont et l'extrémité transversale amont de la surface sont de préférence introduites dans un canal (37) s'étendant parallèle à l'axe longitudinal (X) et à la rainure du rail (6) correspondant, et est séparé de la surface à couvrir par la rainure. Il est évidemment possible d'avoir une paire de rails (6) pour verrouiller les bords longitudinaux de la couverture et une paire de rails séparés pour guider le chariot dans ses translations, mais il est plus pratique de réunir ces deux fonctions sur une même paire de rails (6) qui ont un profil comprenant une rainure, une surface pour supporter et guider les roulettes amont et aval (33am, 33av) et, le cas échéant, un canal pour recevoir les courroies flexibles.

Ce système de courroies flexibles permet de déplacer le chariot le long des rails de manière plus reproductible qu'une roue dentée roulant sur une crémaillère droite s'étendant le long de l'axe longitudinal (X). Comme le segment angulaire de la roue d'entraînement (9) coiffé par une courroie flexible (31) telle que décrite ci-dessus est bien supérieur à celui couvert par une crémaillère droite, par exemple posée au fond du rail, les risques de glissement d'une roue d'entraînement sont considérablement réduits. Un tel glissement d'une roue d'entraînement provoquerait la mise en travers du chariot et le blocage du système. Un deuxième avantage d'un tel système est qu'entre le chariot et les coins (35) de la surface à couvrir, le canal est obturé par la courroie (31) qui est insérée dans le rail dans ses deux sections (31a) en amont et en aval du tambour. Ceci permet de diminuer l'entrée de corps étrangers dans les rails, tels que poussières, graviers, brindilles, etc., et aussi d'éviter qu'une personne s'y coince un orteil, par exemple dans le cas d'une piscine.

Dans une variante alternative de mécanisme de translation illustrée aux Figures 1(b), 1(c) et 7(b), le mécanisme de translation comprend les éléments suivants. Deux courroies flexibles (31d) et fermées (i.e., formant une boucle) enrobent sans glissement les roulettes amont et aval (33am, 33av) ainsi que la roue d'entraînement (9) aux deux extrémités du tambour. Chaque courroie flexible comprend une face intérieure et une face extérieure séparée de la face intérieure par une épaisseur des courroies, la face extérieure de chaque courroie flexible est crantée et la face intérieure de chaque courroie flexible est soit crantée, soit texturée. La surface intérieure de chaque courroie flexible coiffe sans glissement les roulettes amont et aval (33am, 33av) ainsi que la roue d'entraînement (9).

Deux crémaillères (31c) sont disposées le long des bords longitudinaux et parallèles à et séparés de l'ouverture (14) de chaque rail (6). La surface extérieure crénelée d'une portion de chacune des courroies flexibles comprise entre la roulette aval (33av) et la roulette amont (33am) correspondantes s'engrène dans la crémaillère correspondante. La rotation des roues d'entraînement provoque la rotation des courroies flexibles déplaçant ainsi le tambour en s'engrenant dans les crémaillères qui sont fixes. On pourrait aussi contacter les roues d'entraînement directement avec les crémaillères, mais la surface de contact entre l'engrenage des roues d'entraînement avec les crémaillères est beaucoup plus petite qu'avec la solution des courroies flexibles décrite ci-dessus, évitant ainsi des glissements qui mettraient le tambour de travers par rapport aux rails et bloqueraient le fonctionnement du dispositif.

Un dispositif de couverture selon la présente invention est particulièrement adapté au recouvrement de surfaces telles que :
(a) un bassin rempli ou non d'un liquide tel qu'une piscine, un jacuzzi, un bassin de rétention, de traitement ou de désalinisation des eaux ;
(b) un terrain de sports, tel un terrain de tennis ou de cricket ;
(c) une caisse de véhicule, telle une remorque,
(d) une surface vitrée telle une serre, un jardin d'hiver ou une fenêtre de véhicule,
(e) une ouverture dans un mur, comme par exemple une porte ou une fenêtre.

Avec le dispositif selon la présente invention, une surface (3) peut être couverte par une couverture (10) très simplement de la manière suivante :
(a) le tambour (2) se trouve à une extrémité amont de la surface à couvrir, avec un bord transversal de la couverture étant fixé à cette extrémité amont de la surface et le reste de la couverture étant enroulé autour du tambour,
(b) avancer le tambour dans une première direction au-dessus de la surface à couvrir le long des rails (6), et ainsi dérouler du tambour la couverture qui se déploie sur la portion de surface en amont du tambour et, en même temps, guider et maintenir l'élément en saillie (12) de chaque bord longitudinal de la couverture vis-à-vis de l'ouverture (14) du rail (6) correspondant au fur et à mesure que le tambour avance,
(c) introduire l'élément en saillie dans l'espace (14e) du rail et verrouiller ainsi l'élémenten saillie au rail.

Dans un dispositif de couverture tel que décrit ci-dessus, les bords longitudinaux de la couverture sont fermement verrouillés offrant ainsi une sécurité accrue, surtout dans le cas de bassins, remplis ou pas d'eau ou autre liquide. Cela permet également d'atteindre un degré d'étanchéité important entre le volume défini sous la couverture et le volume défini au-dessus de la couverture. Cela permet, de nouveau dans le cas de bassins, de limiter fortement l'évaporation d'eau et des produits chimiques, tels que le chlore. Cela permet également de pressuriser le volume défini sous la couverture. Afin de réaliser ce verrouillage des bords longitudinaux de la couverture, des éléments en saillie (12) formant des bourrelets convexes sont utilisés. De tels bourrelets convexes sont beaucoup plus faciles à coupler aux bords longitudinaux d'une couverture que des profilés extrudés de géométries complexes. Le système de verrouillage du dispositif de la présente invention ne nécessite pas de synchroniser l'introduction d'un bourrelet avec un élément tiers, tels qu'une courroie flexible tel que décrit dans WO2010054960 et WO2014064138, ou une portion de grillage comme décrit dans FR2803769, ce qui est avantageux pour la simplicité du système et sa reproductibilité et longévité.

| **REF** | **CARACTERISTIQUE** |
|---|---|
| 1 | Dispositif de couverture d'une surface |
| 2 | Tambour |
| 3 | Surface à couvrir |
| 6 | Rail |
| 9 | Roue d'entrainement |
| 10 | Couverture |
| 12 | Élément en saillie |
| 14 | Ouverture de rail |
| 14b | Boudin flexible |
| 14e | Espace de rail |
| 15 | Poulie d'alignement |
| 16 | Système d'insertion / roulette d'insertion |
| 16a | Poulie d'orientation |
| 21 | Chariot |
| 30 | Moteur |
| 31 | Courroie flexible |
| 31a | Section latérale de courroie flexible |
| 31b | Section centrale de courroie flexible |
| 31c | Crémaillère |
| 31d | Courroie flexible fermée |
| 33am | Roulette amont du chariot |
| 33av | Roulette aval du chariot |
| 35 | Extrémités des courroies flexibles 31 |
| 37 | Canal d'insertion des courroies flexibles |
| | |
| d | Diamètre minimum de l'élément en saillie (mesurée normal à bord longitudinal) |
| dû | Diamètre minimum de l'élément en saillie à configuration au repos (mesurée normal à bord longitudinal) |
| d1 | Diamètre minimum de l'élément en saillie à configuration non-au repos (mesurée normal à bord longitudinal) |
| D | Diamètre maximum de l'élément en saillie |
| F | Force appliquée parallèle à l'axe transversal (Y) |
| Le | Largeur maximale de l'espace (mesurée parallèle à Y) |
| Lo | Largeur minimum de l'ouverture (mesurée parallèle à Y) |
| Lo0 | Largeur minimum de l'ouverture à configuration au repos (mesurée parallèle à Y) |
| Lo1 | Largeur minimum de l'ouverture à configuration non-au repos (mesurée parallèle à Y) |
| X | Axe longitudinal |
| Y | Axe transversal |
| (X, Y) | Plan (X, Y) |

## Revendications

1. Dispositif (1) de couverture d'une surface (3) comprise dans un rectangle de longueurs s'étendant parallèles à un axe longitudinal (X) et de largeurs s'étendant parallèles à un axe transversal (Y), normal à l'axe longitudinal (X), le dispositif comprenant :
(a) une couverture (10) sensiblement rectangulaire de dimensions égales à celle du rectangle et ayant premier et deuxième bords longitudinaux opposés l'un à l'autre et premier et deuxième bords transversaux opposés l'un à l'autre, chaque bord longitudinal étant muni d'un élément (12) en saillie, s'étendant le long dudit chaque bord longitudinal dans lequel l'élément en saillie de chaque bord longitudinal définit un profile en coupe normale au bord longitudinal correspondant ayant un diamètre minimum (d),
(b) deux rails (6) placés de part et d'autre de ladite surface (3) parallèles à l'axe longitudinal (X), chaque rail étant constitué d'un profilé ayant une ouverture (14) sur une de ses faces et orientée à l'opposé de la surface à couvrir, l'ouverture donnant accès à un espace (14e) dans le rail définissant avec l'ouverture une rainure s'étendant tout le long de chaque rail,
(c) un tambour (2) de rayon (R) monté à rotation apte à enrouler et dérouler la couverture (10) fixée au tambour par son premier bord transversal, ledit tambour (2) étant monté sur un mécanisme de translation longitudinale permettant la translation longitudinale du tambour le long des deux rails, dans un premier sens parallèle à l'axe longitudinal (X) entraînant le déroulement de la couverture et son déploiement au-dessus de la surface à couvrir (3) et dans un second sens parallèle à l'axe longitudinal (X) entraînant l'enroulement de la couverture et son retrait de ladite surface (3),
(d) une poulie de renvoi (13) pourvue de chaque côté de la surface à couvrir permettant de guider et positionner ledit élément en saillie (12) de chaque bord longitudinal de la couverture vis-à-vis l'ouverture (14) du rail (6) correspondant lors de la translation dans le premier sens du tambour entraînant le déroulement de la couverture,
(e) un système d'insertion (16) continu de l'élément en saillie (12) des bords longitudinaux de la couverture (10) à travers l'ouverture (14) et dans l'espace (14e) desdits rails (6),
(f) dans une coupe normale à chaque bord longitudinal de la couverture, l'élément en saillie (12) correspondant définit une géométrie convexe, dans laquelle une géométrie convexe est définie comme une géométrie plane définie par un périmètre fermé qu'une ligne droite quelconque ne peut traverser plus de deux fois
(g) dans une coupe transversale, normale à l'axe longitudinal (X), l'ouverture (14) de la rainure a une largeur maximale (Lo), et l'espace (14e) a une largeur maximale (Le) supérieure à la largeur maximale (Lo) de l'ouverture (14) (Lo < Le), où les largeurs maximales (Lo, Le) sont mesurées parallèles à l'axe transversal (Y), **caractérisé en ce que**
• l'élément en saillie (12) de chaque bord longitudinal et la rainure du rail correspondant sont configurés pour qu'une fois inséré dans l'espace (14e) par le système d'insertion, l'élément en saillie occupant seul l'espace (14e) ne puisse en ressortir par la seule action d'une force (F) appliquée parallèle à l'axe transversal (Y) dans la direction de la surface à couvrir.

2. Dispositif selon la revendication 1, dans lequel,
• le diamètre minimum (d) de l'élément en saillie est inférieur à la largeur maximale (Lo) de l'ouverture (14) (d < Lo),
• l'élément en saillie a un diamètre maximum (D) supérieur à la largeur maximale (Lo) de l'ouverture (14) (Lo < D), et dans lequel
• le système d'insertion est configuré pour orienter l'élément en saillie (12) à travers l'ouverture (14) du rail correspondant en présentant un diamètre compris entre le diamètre minimum (d) et le diamètre maximum (D) et inférieur à la largeur maximale (L₀) de l'ouverture (14), l'élément en saillie changeant d'orientation une fois que l'élément en saillie se trouve dans l'espace (14e).

3. Dispositif selon la revendication 1, dans lequel l'élément en saillie de chaque bord longitudinal est compressible tel que,
• dans une configuration de repos, le diamètre minimum (d) est égal à dû qui est compris entre la largeurs maximales (Lo, Le) de l'ouverture (14) et de l'espace (14e) du rail correspondant (Lo < dû < Le), et
• dans une configuration comprimée, le diamètre minimum (d) est égal à d1, qui est qui est inférieur ou égal à la largeur maximale (Lo) de l'ouverture (14) du rail correspondant (d1 ≤ Lo),
et dans lequel le système d'insertion permet de comprimer l'élément en saillie (12) dans sa configuration comprimée lors de son insertion à travers l'ouverture (14) du rail (6) correspondant, l'élément en saillie (12) recouvrant sa configuration de repos une fois que l'élément en saillie se trouve dans l'espace (14e).

4. Dispositif selon la revendication 1, dans lequel l'élément en saillie (12) de chaque bord longitudinal est un câble en forme de spires consécutives formant un ressort hélicoïdal, dont l'axe est parallèle au bord longitudinal correspondant de la couverture (10), dans lequel les spires sont définies telles que,
• dans une configuration de repos, le diamètre minimum (d) mesuré parallèle à l'axe transversal (Y) de chaque spire au repos est égal à dû qui est compris entre la largeurs maximales (Lo, Le) de l'ouverture (14) et de l'espace (14e) du rail correspondant (Lo < dû < Le), et
• dans une configuration déformée, l'angle formé par des spires déformées avec l'axe longitudinal (X) est modifié de sorte que le diamètre minimum (d1) mesuré dans un plan normal à l'axe longitudinal (X) de chaque spire déformée est inférieur ou égal à la largeur maximale (Lo) de l'ouverture (14) du rail correspondant (d1 ≤ Lo),
et dans lequel le système d'insertion permet de déformer localement des spires dans leur configuration déformée lors de leur insertion à travers l'ouverture (14) du rail (6) correspondant, les spires recouvrant leur configuration de repos une fois qu'elles se trouvent dans l'espace (14e).

5. Dispositif selon la revendication 1, dans lequel la largeur maximale (Lo) de l'ouverture (14) peut varier entre,
• une configuration de repos, dans laquelle la largeur maximale (Lo) de l'ouverture est égale à Lo0, qui est inférieure au diamètre minimum (d) de l'élément en saillie (12) (Lo0 < d), et
• une configuration d'insertion, dans laquelle la largeur maximale (Lo) de l'ouverture est égale à Lo1, qui est supérieure ou égale au diamètre minimum (d) de l'élément en saillie (12) (d ≤ Lo1).
et dans lequel le système d'insertion est configuré pour appliquer une force permettant d'amener l'ouverture (14) dans sa configuration d'insertion lors de l'insertion de l'élément en saillie (12) à travers l'ouverture (14) du rail (6) correspondant, l'ouverture (14) retournant vers sa configuration de repos une fois que l'élément en saillie se trouve dans l'espace (14e).

6. Dispositif selon la revendication 5, dans lequel l'ouverture (14) comprend une première lèvre opposée à une deuxième lèvre, la première et/ou deuxième lèvre étant munie d'une lamelle flexible (14L) orientée vers l'autre lèvre opposée, la ou les lamelles définissant au repos l'ouverture de largeur maximale (Lo0) de la configuration de repos et, soumises à une force normale à l'axe longitudinale orientée vers l'espace (14e), fléchissent et définissent ainsi l'ouverture de largeur maximale (Lo1) de la configuration d'insertion.

7. Dispositif selon la revendication 5, dans lequel l'ouverture (14) comprend une première lèvre opposée à une deuxième lèvre, la première et/ou deuxième lèvre étant munie d'un boudin flexible (14b), le ou les boudins flexibles (14b) définissant au repos l'ouverture de largeur maximale (Lo0) de la configuration de repos et, soumis à une force normale au plan (X, Y), s'écrasent et définissent ainsi l'ouverture de largeur maximale (Lo1) de la configuration d'insertion.

8. Dispositif selon la revendication 5, dans lequel l'espace (14e) contient un boudin flexible (14b), le boudin flexible (14b) au repos obstruant partiellement l'ouverture définissant ainsi la largeur maximale (Lo0) de la configuration de repos et, soumis à une force normale au plan (X, Y), s'écrase et définit ainsi l'ouverture de largeur maximale (Lo1) de la configuration d'insertion.

9. Dispositif selon la revendication 5, dans lequel l'ouverture (14) comprend une première lèvre opposée à une deuxième lèvre, la première et/ou deuxième lèvre étant munie d'une brosse comprenant des poils s'étendant vers la lèvre opposée et fermant partiellement ou complètement l'ouverture (14), lesdits poils étant suffisamment flexibles pour fléchir et ainsi permettre l'introduction de l'élément en saillie (12) à travers l'ouverture (14).

10. Dispositif selon l'une quelconque des revendications précédentes, dans lequel le mécanisme de translation comprend un chariot (21) monté sur les rails (6) et surplombant transversalement la surface (3) à couvrir et supportant le tambour (2) comprenant à chacune de ses extrémités :
• une roue d'entraînement (9) dont l'axe de rotation est parallèle à celui dudit tambour (2);
• au moins une roulette aval (33av) et une roulette amont (33am) reposant sur les rails (6) ou sur une surface adjacente aux rails, et permettant la translation longitudinale du chariot (21), et étant montées la première en aval et la seconde en amont de la roue d'entraînement (9) dans la première direction de déplacement, et constituant avec celle-ci un triangle dont la roue d'entraînement (9) forme un sommet supérieur.

11. Dispositif selon la revendication 10, dans lequel la roulette aval (33av) et la roulette amont (33am) reposent sur le rail (6) correspondant et dans lequel le mécanisme de translation comprend deux courroies flexibles (31) fixées uniquement à chacune de leurs extrémités (35) aux quatre coins de la surface à couvrir et s'étendent le long des bords longitudinaux de la surface à couvrir de la manière suivante :
• elles sont disposées dans un canal (37) défini dans les rails (6), s'étendant séparées et parallèles à la rainure correspondante dans les sections latérales (31a) comprises entre un point de fixation (35) et la roulette (33av, 33am) la plus proche dudit point de fixation,
• elles coiffent sans glissement la roue d'entraînement (9) dans la section centrale (31b) comprise entre les deux roulettes (33av, 33am).

12. Dispositif selon la revendication 10, dans lequel le mécanisme de translation comprend :
• deux courroies flexibles fermées (31d) formant une boucle et comprenant une face intérieure et une face extérieure séparée de la face intérieure par une épaisseur des courroies, les faces intérieure et extérieure de chaque courroie flexible étant chacune crantée, la surface intérieure de chaque courroie flexible coiffant sans glissement les roulettes amont et aval (33am, 33av) ainsi que la roue d'entraînement (9) et
• deux crémaillères (31c) disposées le long des bords longitudinaux, séparées et parallèles à l'ouverture (14) de chaque rail (6), la surface extérieure d'une portion de chacune des courroies flexibles comprise entre la roulette aval (33av) et la roulette amont (33am) correspondantes s'engrenant dans la crémaillère correspondante.

13. Utilisation d'un dispositif selon l'une quelconque des revendications précédentes pour couvrir une surface (3) sélectionnée parmi :
(a) un bassin rempli ou non d'un liquide tel qu'une piscine, jacuzzi, un bassin de rétention, de traitement ou de désalinisation des eaux ;
(b) un terrain de sports, tel un terrain de tennis ou de cricket ;
(c) une caisse de véhicule,
(d) une surface vitrée telle une serre, un jardin d'hiver ou une fenêtre ou porte,
(e) une ouverture dans un mur, telle une fenêtre ou une porte..

14. Procédé pour couvrir une surface (3) par une couverture (10) utilisant un dispositif de couverture selon l'une quelconque des revendications 1 à 12, dans lequel :
(a) le tambour (2) se trouve à une extrémité amont de la surface à couvrir, avec un bord transversal de la couverture étant fixé à cette extrémité amont de la surface et le reste de la couverture étant enroulé autour du tambour,
(b) avancer le tambour dans une première direction au-dessus de la surface à couvrir le long des rails (6), et ainsi dérouler du tambour la couverture qui se déploie sur la portion de surface en amont du tambour et, en même temps, guider et maintenir l'élément en saillie (12) de chaque bord longitudinal de la couverture vis-à-vis de l'ouverture (14) du rail (6) correspondant au fur et à mesure que le tambour avance,
(c) introduire l'élément en saillie dans l'espace (14e) du rail et verrouiller ainsi l'élément en saillie au rail.

## Patentansprüche

1. Vorrichtung (1) zum Abdecken einer Fläche (3), die in einem Rechteck mit Längen, die sich parallel zu einer Längsachse (X) erstrecken, und Breiten, die sich parallel zu einer Querachse (Y) senkrecht zur Längsachse (X) erstrecken, enthalten ist, wobei die Vorrichtung Folgendes umfasst:
(a) eine im Wesentlichen rechteckige Abdeckung (10) mit Abmessungen, die denen des Rechtecks entsprechen, und mit einer ersten und einer zweiten Längskante, die einander gegenüberliegen, und einer ersten und einer zweiten Querkante, die einander gegenüberliegen, wobei jede Längskante mit einem vorstehenden Element (12) versehen ist, das sich entlang der jeweiligen Längskante erstreckt, wobei das vorstehende Element jeder Längskante ein Schnittprofil senkrecht zur entsprechenden Längskante mit einem minimalen Durchmesser (d) definiert,
(b) zwei zur Längsachse (X) parallele Schienen (6), die auf beiden Seiten der Fläche (3) angeordnet sind, wobei jede Schiene aus einem Profil gebildet ist, das auf einer seiner Seiten eine Öffnung (14) aufweist, die der abzudeckenden Fläche gegenüberliegt, wobei die Öffnung Zugang zu einem Raum (14e) in der Schiene gewährt, der mit der Öffnung eine Nut definiert, die sich entlang der gesamten Länge der Schiene erstreckt,
(c) eine Trommel (2) mit einem Radius (R), die drehbar montiert und dazu geeignet ist, die mit ihrer ersten Querkante an der Trommel befestigte Abdeckung (10) auf- und abzurollen, wobei die Trommel (2) auf einem Längsverschiebungsmechanismus montiert ist, der die Längsverschiebung der Trommel entlang der beiden Schienen in einer ersten Richtung parallel zur Längsachse (X), die das Abwickeln der Abdeckung und ihre Ausbreitung über der abzudeckenden Fläche (3) bewirkt, und in einer zweiten Richtung parallel zur Längsachse (X), die das Aufwickeln der Abdeckung und ihren Rückzug von der Fläche (3) bewirkt, ermöglicht,
(d) eine Umlenkrolle (13), die auf jeder Seite der abzudeckenden Fläche vorgesehen ist und es ermöglicht, das vorstehende Element (12) jeder Längskante der Abdeckung gegenüber der Öffnung (14) der entsprechenden Schiene (6) bei der Verschiebung der Trommel in der ersten Richtung, die das Abwickeln der Abdeckung bewirkt, zu führen und zu positionieren,
(e) ein durchgehendes System (16) zum Einführen des von den Längskanten der Abdeckung (10) vorstehenden Elements (12) durch die Öffnung (14) und in den Raum (14e) der Schienen (6),
(f) wobei das entsprechende vorstehende Element (12) in einem zu jeder Längskante der Abdeckung senkrechten Schnitt eine konvexe Geometrie definiert, in der eine konvexe Geometrie als eine ebene Geometrie definiert ist, die durch einen geschlossenen Umfang definiert ist, den eine beliebige Gerade nicht mehr als zweimal durchqueren kann,
(g) wobei die Öffnung (14) der Nut in einem zur Längsachse (X) senkrechten Schnitt eine maximale Breite (Lo) aufweist und der Raum (14e) eine maximale Breite (Le) aufweist, die größer als die maximale Breite (Lo) der Öffnung (14) ist, (Lo < Le), wobei die maximalen Breiten (Lo, Le) parallel zur Querachse (Y) gemessen werden,
**dadurch gekennzeichnet, dass**
• das vorstehende Element (12) jeder Längskante und die Nut der entsprechenden Schiene so konfiguriert sind, dass das vorstehende Element (14e), das den Raum allein einnimmt, nachdem es durch das Einführsystem in den Raum (14e) eingeführt wurde, diesen allein durch die Wirkung einer Kraft (F), die parallel zur Querachse (Y) in Richtung der abzudeckenden Fläche aufgebracht wird, nicht verlassen kann.

2. Vorrichtung nach Anspruch 1, wobei,
• der minimale Durchmesser (d) des vorstehenden Elements kleiner als die maximale Breite (Lo) der Öffnung (14) ist, (d < Lo),
• das vorstehende Element einen maximalen Durchmesser (D) aufweist, der größer als die maximale Breite (Lo) der Öffnung (14) ist, (Lo < D), und wobei
• das Einführsystem dazu konfiguriert ist, das vorstehende Element (12) durch die Öffnung (14) der entsprechenden Schiene hindurch auszurichten, indem es einen Durchmesser aufweist, der zwischen dem minimalen Durchmesser (d) und dem maximalen Durchmesser (D) liegt und kleiner als die maximale Breite (Lo) der Öffnung (14) ist,
wobei das vorstehende Element die Ausrichtung ändert, sobald sich das vorstehende Element im Raum (14e) befindet.

3. Vorrichtung nach Anspruch 1, wobei das vorstehende Element jeder Längskante komprimierbar ist, sodass
• in einer Ruhekonfiguration der minimale Durchmesser (d) gleich d0 ist, der zwischen der maximalen Breite (Lo, Le) der Öffnung (14) und des Raums (14e) der entsprechenden Schiene liegt, (Lo < d0 < Le), und
• in einer komprimierten Konfiguration der minimale Durchmesser (d) gleich d1 ist, der kleiner als oder so groß wie die maximale Breite (Lo) der Öffnung (14) der entsprechenden Schiene ist, (d1 ≤ Lo),
und wobei das Einführsystem es ermöglicht, das vorstehende Element (12) bei seiner Einführung durch die Öffnung (14) der entsprechenden Schiene (6) in seine komprimierte Konfiguration zu komprimieren, wobei das vorstehende Element (12) seine Ruhekonfiguration wiedererlangt, sobald sich das vorstehende Element im Raum (14e) befindet.

4. Vorrichtung nach Anspruch 1, wobei das vorstehende Element (12) jeder Längskante ein Kabel in Form von aufeinanderfolgenden Windungen ist, die eine Schraubenfeder bilden, deren Achse parallel zur entsprechenden Längskante der Abdeckung (10) verläuft, wobei die Windungen so definiert sind, dass
• in einer Ruhekonfiguration der parallel zur Querachse (Y) gemessene minimale Durchmesser (d) jeder Windung im Ruhezustand gleich d0 ist, der zwischen der maximalen Breite (Lo, Le) der Öffnung (14) und des Raums (14e) der entsprechenden Schiene liegt, (Lo < d0 < Le), und
• in einer verformten Konfiguration der durch verformte Windungen mit der Längsachse (X) gebildete Winkel so verändert ist, dass der in einer zur Längsachse (X) senkrechten Ebene gemessene minimale Durchmesser (d1) jeder verformten Windung kleiner als oder so groß wie die maximale Breite (Lo) der Öffnung (14) der entsprechenden Schiene ist, (d1 ≤ Lo), und wobei das Einführsystem es ermöglicht, Windungen bei ihrer Einführung durch die Öffnung (14) der entsprechenden Schiene (6) lokal in ihre verformte Konfiguration zu verformen, wobei die Windungen ihre Ruhekonfiguration wiedererlangen, sobald sie sich im Raum (14e) befinden.

5. Vorrichtung nach Anspruch 1, wobei die maximale Breite (Lo) der Öffnung (14) variieren kann zwischen:
• einer Ruhekonfiguration, in der die maximale Breite (Lo) der Öffnung gleich Lo0 ist, die kleiner als der minimale Durchmesser (d) des vorstehenden Elements (12) ist, (Lo0 < d), und
• einer Einführkonfiguration, in der die maximale Breite (Lo) der Öffnung gleich Lo1 ist, die größer als oder so groß wie der minimale Durchmesser (d) des vorstehenden Elements (12) ist, (d ≤ Lo1).
und wobei das Einführsystem dazu konfiguriert ist, bei der Einführung des vorstehenden Elements (12) durch die Öffnung (14) der entsprechenden Schiene (6) eine Kraft auszuüben, die es ermöglicht, die Öffnung (14) in ihre Einführkonfiguration zu bringen, wobei die Öffnung (14) in ihre Ruhekonfiguration zurückkehrt, sobald sich das vorstehende Element im Raum (14e) befindet.

6. Vorrichtung nach Anspruch 5, wobei die Öffnung (14) eine erste Lippe umfasst, die einer zweiten Lippe gegenüberliegt, wobei die erste und/oder die zweite Lippe mit einer flexiblen Lamelle (14L) ausgestattet sind, die der anderen gegenüberliegenden Lippe zugewandt ist, wobei die Lamelle(n) im Ruhezustand die Öffnung maximaler Breite (Lo0) der Ruhekonfiguration definiert (definieren) und, wenn sie einer zur Längsachse senkrechten Kraft, die in Richtung des Raums (14e) gerichtet ist, ausgesetzt ist (sind), sich biegt (biegen) und dadurch die Öffnung maximaler Breite (Lo1) der Einführkonfiguration definiert (definieren).

7. Vorrichtung nach Anspruch 5, wobei die Öffnung (14) eine erste Lippe umfasst, die einer zweiten Lippe gegenüberliegt, wobei die erste und/oder die zweite Lippe mit einer flexiblen Wulst (14b) ausgestattet sind, wobei die flexible Wulst (flexiblen Wülste) (14b) im Ruhezustand die Öffnung maximaler Breite (Lo0) der Ruhekonfiguration definiert (definieren) und, wenn sie einer zur Ebene (X, Y) senkrechten Kraft ausgesetzt ist (sind), niedergedrückt wird (werden) und so die Öffnung maximaler Breite (Lo1) der Einführkonfiguration definiert (definieren).

8. Vorrichtung nach Anspruch 5, wobei der Raum (14e) eine flexible Wulst (14b) enthält, wobei die flexible Wulst (14b) im Ruhezustand die Öffnung teilweise verschließt und so die maximale Breite (Lo0) der Ruhekonfiguration definiert und, wenn sie einer zur Ebene (X, Y) senkrechten Kraft ausgesetzt ist, niedergedrückt wird und so die Öffnung maximaler Breite (Lo1) der Einführkonfiguration definiert.

9. Vorrichtung nach Anspruch 5, wobei die Öffnung (14) eine erste Lippe umfasst, die einer zweiten Lippe gegenüberliegt, wobei die erste und/oder die zweite Lippe mit einer Bürste versehen sind, die Borsten umfasst, die sich zur gegenüberliegenden Lippe hin erstrecken und die Öffnung (14) teilweise oder vollständig verschließen, wobei die Borsten flexibel genug sind, um sich zu biegen und dadurch das Einführen des vorstehenden Elements (12) durch die Öffnung (14) zu ermöglichen.

10. Vorrichtung nach einem der vorangehenden Ansprüche, wobei der Verschiebungsmechanismus einen Schlitten (21) umfasst, der auf den Schienen (6) montiert ist, die zu bedeckende Fläche (3) quer überragt und die Trommel (2) trägt, die an jedem ihrer Enden Folgendes umfasst:
• ein Antriebsrad (9), dessen Drehachse parallel zu der der Trommel (2) ist;
• mindestens eine stromabwärtige Rolle (33av) und eine stromaufwärtige Rolle (33am), die auf den Schienen (6) oder auf einer an die Schienen angrenzenden Fläche aufliegen und die Längsverschiebung des Schlittens (21) ermöglichen und wobei in der ersten Bewegungsrichtung die erste stromabwärts und die zweite stromaufwärts des Antriebsrads (9) montiert sind und mit diesem ein Dreieck bilden, dessen obere Spitze des Antriebsrads (9) bildet.

11. Vorrichtung nach Anspruch 10, wobei die stromabwärtige Rolle (33av) und die stromaufwärtige Rolle (33am) auf der entsprechenden Schiene (6) aufliegen und wobei der Verschiebungsmechanismus zwei flexible Riemen (31) umfasst, die lediglich mit ihren Enden (35) an den vier Ecken der abzudeckenden Fläche befestigt sind und sich entlang der Längskanten der abzudeckenden Fläche so erstrecken, dass:
• sie in einem Kanal (37) angeordnet sind, der in den Schienen (6) definiert ist, und sich getrennt von und parallel zu der entsprechenden Nut in den Seitenabschnitten (31a) erstrecken, die zwischen einem Befestigungspunkt (35) und der dem Befestigungspunkt am nächsten liegenden Rolle (33av, 33am) liegen,
• sie das Antriebsrad (9) im mittleren Abschnitt (31b) zwischen den beiden Rollen (33av, 33am) ohne Schlupf überdecken.

12. Vorrichtung nach Anspruch 10, wobei der Verschiebungsmechanismus Folgendes umfasst:
• zwei geschlossene flexible Riemen (31d), die eine Schleife bilden und eine Innenseite und eine von der Innenseite durch eine Riemendicke getrennte Außenseite umfassen, wobei die Innenseite und die Außenseite jedes flexiblen Riemens jeweils gezahnt sind, wobei die Innenfläche jedes flexiblen Riemens die stromaufwärtige und die stromabwärtige Rolle (33am, 33av) sowie das Antriebsrad (9) ohne Schlupf überdeckt, und
• zwei Zahnstangen (31c), die entlang der Längskanten, getrennt und parallel zur Öffnung (14) jeder Schiene (6) angeordnet sind, wobei die Außenfläche eines Abschnitts jedes der flexiblen Riemen, der zwischen der entsprechenden stromabwärtigen Rolle (33av) und der stromaufwärtigen Rolle (33am) eingeschlossen ist, in die entsprechende Zahnstange eingreift.

13. Verwendung einer Vorrichtung nach einem der vorangehenden Ansprüche zum Abdecken einer Fläche (3), die ausgewählt ist aus:
(a) einem mit einer Flüssigkeit gefüllten oder nicht gefüllten Becken, wie einem Schwimmbecken, einem Whirlpool, einem Wasserrückhalte-, Wasseraufbereitungs- oder Wasserentsalzungsbecken;
(b) einem Sportplatz, wie einem Tennis- oder Cricketplatz;
(c) einer Fahrzeugkarosserie;
(d) einer verglasten Fläche, wie einem Gewächshaus, einem Wintergarten oder einem Fenster oder einer Tür;
(e) einer Öffnung in einer Wand, wie einem Fenster oder einer Tür.

14. Verfahren zum Abdecken einer Fläche (3) durch eine Abdeckung (10) unter Verwendung einer Abdeckungsvorrichtung nach einem der Ansprüche 1 bis 12, wobei:
(a) sich die Trommel (2) an einem stromaufwärtigen Ende der abzudeckenden Fläche befindet, wobei eine Querkante der Abdeckung an diesem stromaufwärtigen der Fläche befestigt ist und der Rest der Abdeckung um die Trommel gewickelt ist,
(b) die Trommel in einer ersten Richtung über die abzudeckende Fläche entlang der Schienen (6) bewegt wird und dadurch die Abdeckung von der Trommel abgewickelt wird und über den Abschnitt der Fläche stromaufwärts der Trommel ausgebreitet wird, und zugleich das vorstehende Element (12) jeder Längskante der Abdeckung gegenüber der Öffnung (14) der entsprechenden Schiene (6) geführt und gehalten wird, während sich die Trommel bewegt,
(c) das vorstehende Element in den Raum (14e) der Schiene eingeführt und so das vorstehende Element an der Schiene blockiert wird.

## Claims

1. Device (1) for covering a surface (3) comprised within a rectangle with lengths extending parallel to a longitudinal axis (X) and widths extending parallel to a transverse axis (Y) normal to the longitudinal axis (X), the device comprising:
(a) a substantially rectangular cover (10) with dimensions equal to those of the rectangle and having first and second longitudinal edges opposite one another and first and second transverse edges opposite one another, each longitudinal edge being equipped with a projecting element (12) extending along said each longitudinal edge in which the projecting element of each longitudinal edge defines a profile in section normal to the corresponding longitudinal edge having a minimum diameter (d),
(b) two rails (6) positioned one on each side of said surface (3) and parallel to the longitudinal axis (X), each rail being made up of a profile section having an opening (14) on one of its faces and oriented away from the surface that is to be covered, the opening providing access to a space (14e) in the rail which together with the opening defines a slot extending along the entire length of each rail,
(c) a drum (2) of radius (R) mounted with the ability to rotate so as to be able to roll up and unroll the cover (10) which is fixed to the drum via its first transverse edge, said drum (2) being mounted on a longitudinal-translation mechanism allowing longitudinal translation of the drum along the two rails in a first direction parallel to the longitudinal axis (X) causing the cover to be unrolled and deployed over the surface (3) that is to be covered and in a second direction parallel to the longitudinal axis (X) causing the cover to be rolled up and removed from said surface (3),
(d) a deflection pulley (13) provided on each side of the surface that is to be covered so as to guide and position said projecting element (12) of each longitudinal edge of the cover so that it faces the opening (14) in the corresponding rail (6) as the drum effects translational movement in the first direction causing the cover to be unrolled,
(e) an insertion system (16) for the continuous insertion of the projecting element (12) of the longitudinal edges of the cover (10) through the opening (14) and into the space (14e) of said rails (6),
(f) in a cross section normal to each longitudinal edge of the cover, the corresponding projecting element (12) defines a convex geometry, in which a convex geometry is defined as being a planar geometry defined by a closed perimeter that any straight line cannot cross more than twice
(g) in a transverse section, normal to the longitudinal axis (X), the opening (14) of the slot has a maximum width (Lo), and the space (14e) has a maximum width (Le) greater than the maximum width (Lo) of the opening (14) (Lo < Le), where the maximum widths (Lo, Le) are measured parallel to the transverse axis (Y), **characterized in that**
• the projecting element (12) of each longitudinal edge and the slot of the corresponding rail are configured so that once it has been inserted into the space (14e) by the insertion system, the projecting element alone occupying the space (14e) cannot re-emerge therefrom solely under the action of a force (F) applied parallel to the transverse axis (Y) in the direction of the surface that is to be covered.

2. Device according to Claim 1, wherein
• the minimum diameter (d) of the projecting element is less than the maximum width (Lo) of the opening (14) (d < Lo),
• the projecting element has a maximum diameter (D) greater than the maximum width (Lo) of the opening (14) (Lo < D), and wherein
• the insertion system is configured to orient the projecting element (12) through the opening (14) of the corresponding rail by having a diameter comprised between the minimum diameter (d) and the maximum diameter (D) and less than the maximum width (L₀) of the opening (14),
the projecting element changing orientation once the projecting element is inside the space (14e).

3. Device according to Claim 1, wherein the projecting element of each longitudinal edge is compressible so that,
• in a rest configuration, the minimum diameter (d) is equal to d0 which is comprised between the maximum widths (Lo, Le) of the opening (14) and of the space (14e) of the corresponding rail (Lo < d0 < Le), and
• in a compressed configuration, the minimum diameter (d) is equal to d1, which is less than or equal to the maximum width (Lo) of the opening (14) of the corresponding rail (d1 ≤ Lo).
and wherein the insertion system allows the projecting element (12) to be compressed into its compressed configuration as it is inserted through the opening (14) of the corresponding rail (6), the projecting element (12) recovering its rest configuration once the projecting element is inside the space (14e).

4. Device according to Claim 1, wherein the projecting element (12) of each longitudinal edge is a cable in the form of consecutive turns forming a helical spring of which the axis is parallel to the corresponding longitudinal edge of the cover (10), wherein the turns are defined such that
• in a rest configuration, the minimum diameter (d) measured parallel to the transverse axis (Y) of each turn at rest is equal to d0 which is comprised between the maximum widths (Lo, Le) of the opening (14) and of the space (14e) of the corresponding rail (Lo < d0 < Le), and
• in a deformed configuration, the angle formed by deformed turns with respect to the longitudinal axis (X) is modified so that the minimum diameter (d1) measured in a plane normal to the longitudinal axis (X) of each deformed turn is less than or equal to the maximum width (Lo) of the opening (14) of the corresponding rail (d1 ≤ Lo),
and wherein the insertion system allows turns to be deformed locally into their deformed configuration as they are being inserted through the opening (14) of the corresponding rail (6), the turns recovering their rest configuration once they are inside the space (14e).

5. Device according to Claim 1, wherein the maximum width (Lo) of the opening (14) can vary between
• a rest configuration in which the maximum width (Lo) of the opening is equal to Lo0 which is less than the minimum diameter (d) of the projecting element (12) (Lo0 < d), and
• an insertion configuration in which the maximum width (Lo) of the opening is equal to Lo1, which is greater than or equal to the minimum diameter (d) of the projecting element (12) (d ≤ Lo1),
and wherein the insertion system is configured to apply a force allowing the opening (14) to be brought into its insertion configuration upon insertion of the projecting element (12) through the opening (14) of the corresponding rail (6), the opening (14) returning to its rest configuration once the projecting element is inside the space (14e).

6. Device according to Claim 5, wherein the opening (14) comprises a first lip opposite a second lip, the first and/or second lip being equipped with a flexible strip (14L) oriented towards the opposite other lip, the strip or strips at rest defining the opening of maximum width (Lo0) of the rest configuration and, when subjected to a force normal to the longitudinal axis and directed towards the space (14e), flex and thus define the opening of maximum width (Lo1) of the insertion configuration.

7. Device according to Claim 5, wherein the opening (14) comprises a first lip opposite a second lip, the first and/or second lip being equipped with flexible beading (14b), the length or lengths of flexible beading (14b) at rest defining the opening of maximum width (Lo0) of the rest configuration and, when subjected to a force normal to the plane (X, Y), compress and thus define the opening of maximum width (Lo1) of the insertion configuration.

8. Device according to Claim 5, wherein the space (14e) contains flexible beading (14b), the flexible beading (14b) at rest partially obstructing the opening thus defining the maximum width (Lo0) of the rest configuration and, when subjected to a force normal to the plane (X, Y), compresses and thus defines the opening of maximum width (Lo1) of the insertion configuration.

9. Device according to Claim 5, wherein the opening (14) comprises a first lip opposite a second lip, the first and/or second lip being provided with a brush comprising bristles extending towards the opposite lip and partially or completely closing the opening (14), said bristles being flexible enough to flex and thus allow the projecting element (12) to be introduced through the opening (14).

10. Device according to any one of the preceding claims, wherein the translation mechanism comprises a carriage (21) mounted on the rails (6) and transversely overhanging the surface (3) that is to be covered and supporting the drum (2) which at each of its ends comprises:
• a drive wheel (9) of which the axis of rotation is parallel to that of said drum (2);
• at least one downstream wheel (33av) and one upstream wheel (33am) resting on the rails (6) or on a surface adjacent to the rails and allowing the longitudinal translational movement of the carriage (21), and which are mounted, the first one downstream and the second one upstream of the drive wheel (9) in the first direction of travel and constituting with said drive wheel a triangle of which the drive wheel (9) forms a top vertex.

11. Device according to Claim 10, wherein the downstream wheel (33av) and the upstream wheel (33am) rest on the corresponding rail (6) and wherein the translation mechanism comprises two flexible belts (31) fixed only at each of their ends (35) to the four corners of the surface that is to be covered and extending along the longitudinal edges of the surface that is to be covered in the following way:
• they are placed in a canal (37) defined in the rails (6), extending separate from and parallel to the corresponding slot in the lateral sections (31a) comprised between a fixing point (35) and the wheel (33av, 33am) closest to said fixing point,
• they sit over, without slipping, the drive wheel (9) in the central section (31b) comprised between the two wheels (33av, 33am).

12. Device according to Claim 10, wherein the translation mechanism comprises:
• two closed flexible belts (31d) forming a loop and comprising an interior face and an exterior face separated from the interior face by a belt thickness, the interior and exterior faces of each flexible belt each being toothed, the interior surface of each flexible belt sitting over, without slipping, the upstream and downstream wheels (33am, 33av) as well as the drive wheel (9), and
• two racks (31c) positioned along the longitudinal edges, separated from and parallel to the opening (14) of each rail (6), the exterior surface of a portion of each of the flexible belts comprised between the corresponding downstream wheel (33av) and the corresponding upstream wheel (33am) engaging in the corresponding rack.

13. Use of a device according to any one of the preceding claims to cover a surface (3) selected from among:
(a) a basin which may or may not be filled with a liquid, such as a swimming pool, a jacuzzi, a retention, water treatment or water desalination basin;
(b) a sportsground, such as a tennis court or cricket pitch;
(c) a vehicle body,
(d) a glazed surface such as a greenhouse, a conservatory or a window or door,
(e) an opening in a wall, such a window or a door.

14. Method for covering a surface (3) with a cover (10) using a covering device according to any one of Claims 1 to 12, wherein:
(a) the drum (2) is located at an upstream end of the surface that is to be covered, with one transverse edge of the cover being fixed to this upstream end of the surface and the rest of the cover rolled up around the drum,
(b) the drum is advanced in a first direction over the surface that is to be covered along the rails (6), thus unrolling from the drum the cover which deploys over the surface portion upstream of the drum while, at the same time, the projecting element (12) of each longitudinal edge of the cover is guided and held in position so that it faces the opening (14) of the corresponding rail (6) as the drum progressively advances,
(c) the projecting element is introduced into the space (14e) of the rail and the projecting element is thus locked to the rail.
